# EUROPEAN PATENT SPECIFICATION

(11) **EP 2 668 754 B1**
(45) Date of publication and mention of the grant of the patent: **28.03.2018**
(21) Application number: 12703658.0
(22) Date of filing: 27.01.2012
(51) Int. Cl.: H04W 76/02, H04W 76/04, H04L 12/919, H04L 12/927, H04L 12/911

(54) **COEXISTENCE OF USER EQUIPMENT INITIATED AND NETWORK INITIATED QUALITY OF SERVICE FLOWS**
KOEXISTENZ VON BENUTZERVORRICHTUNGSINITIALISIERTEN UND NETZWERKINITIALISIERTEN SERVICESTROM-QUALITÄTEN
COEXISTENCE DE FLUX DE QUALITÉ DE SERVICE INITIÉS PAR LE RÉSEAU ET INITIÉS PAR L'ÉQUIPEMENT UTILISATEUR

(30) Priority: 27.01.2011 US 201161436968 P; 25.01.2012 US 201213358230
(43) Date of publication of application: 04.12.2013
(73) Proprietor: Qualcomm Incorporated, San Diego, CA 92121 (US)
(72) Inventor: ZHAO, Suli, San Diego, California 92121 (US); BALASUBRAMANIAN, Srinivasan, San Diego, California 92121 (US); PAYYAPPILLY, Ajith Tom, San Diego, California 92121 (US)
(74) Representative: Wegner, Hans
(86) International application number: PCT/US2012/023008
(87) International publication number: WO 2012/103503

(56) References cited:
- EP-A1- 1 978 685
- WO-A1-2010/040093
- WO-A1-2010/151850
- WO-A2-2010/033872
- GB-A- 2 386 282
- US-A1- 2003 050 070
- "3rd Generation Partnership Project; Technical Specification Group Services and System Aspects; General Packet Radio Service (GPRS) enhancements for Evolved Universal Terrestrial Radio Access Network (E-UTRAN) access (Release 10)", 3GPP STANDARD; 3GPP TS 23.401, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V10.1.0, 29 September 2010 (2010-09-29), pages 1-271, XP050442333, [retrieved on 2010-09-29]

## Description

### BACKGROUND

### Field

The present application relates generally to communications, and more specifically to supporting Quality of Service (QoS) for applications in multimode devices capable of operating in networks that support both network-initiated QoS and User Equipment (UE) initiated QoS.

### Background

Wireless communication systems are widely deployed to provide various types of communication content such as voice and data. Typical wireless communication systems may be multiple-access systems capable of supporting communication with multiple users by sharing available system resources (e.g., bandwidth, transmit power, etc.). Examples of such multiple-access systems may include code division multiple access (CDMA) systems, time division multiple access (TDMA) systems, frequency division multiple access (FDMA) systems, orthogonal frequency division multiple access (OFDMA) systems, and the like. Additionally, the systems can conform to specifications such as third generation partnership project (3GPP), 3GPP2, 3GPP long-term evolution (LTE), LTE Advanced (LTE-A), etc.

Generally, wireless multiple-access communication systems may simultaneously support communication for multiple mobile devices. Each mobile device may communicate with one or more base stations via transmissions on forward and reverse links. The forward link (or downlink) refers to the communication link from base stations to mobile devices, and the reverse link (or uplink) refers to the communication link from mobile devices to base stations.

As the demand for high-rate and multimedia data services rapidly grows, there has been an effort toward implementation of efficient and robust communication systems with enhanced performance. For example, in recent years, users have started to replace fixed line communications with mobile communications and have increasingly demanded high voice quality, reliable service, and low prices.

To accommodate increasing demand, evolution of core networks of wireless communication systems followed from evolution of radio interfaces. For example, System Architecture Evolution (SAE) lead by 3GPP aims to evolve a Global System for Mobile communications (GSM)/General Packet Radio Service (GPRS) core network. The resultant Evolved Packet Core (EPC) is a multi-access core network based on the Internet Protocol (IP) that enables operators to deploy and utilize one common packet-based core network with a plurality of radio access technologies. The EPC provides optimized mobility for mobile devices and enables efficient handovers between different radio access technologies (e.g., between LTE and High Rate Packet Data (HRPD)). In addition, standardized roaming interfaces enable operators to offer services to subscribers across a variety of access technologies. In addition, the EPC includes an end-to-end quality of service (QoS) concept that enables operators to provide enhanced QoS functions to applications while preserving operator ability to police and charge for such functions.

A related document GB2386282 A describes a method for optimizing the allocation of shared transmission resources between two or more packet data streams executing in a device in a packet data communications network. The device includes a transmission resource manager function. Each application specifies a range of acceptable values for one or more of the parameters that determine the transmission quality of its data stream, and the transmission resource manager function allocates the available transmission resources to all the data streams in dependence on the range of acceptable values supplies by each application.

International Patent WO 2010/151850 A1 discloses a solution for coordinating QoS performance between a device and a network, wherein a device-initiated request is matched with a real QoS instance configured by the network, a virtual QoS instance is created and the communication with the network device is utilized using the virtual QoS instance.

There is still a need to provide a more efficient QoS management for communication flows.

The present invention provides a solution according to the subject matter of the independent claims.

### SUMMARY

Various implementations of systems, methods and devices within the scope of the appended claims each have several aspects, no single one of which is solely responsible for the desirable attributes described herein. Without limiting the scope of the appended claims, some prominent features are described herein.

In one aspect, a wireless communication system is provided. The wireless communication system includes a user equipment. The user equipment includes a quality of service manager configured to receive quality of service information from one of an application and a network for a first resource. The quality of service manager is further configured to establish a communication flow based at least in part on the received quality of service information using the first resource. The quality of service manager is also configured to receive quality of service information from the other of the application or the network for the first resource. The quality of service manager is further configured to modify the communication flow for the application based on the information received from the other of the application or the network.

In a further innovative aspect, a method implemented in a wireless communications system is provided. The method includes receiving quality of service information from one of an application or a network for a first resource. The method also includes establishing a communication flow based at least in part on the received quality of service information using the first resource. The method further includes receiving quality of service information from the other of the application or the network for the first resource. The method additionally includes modifying the communication flow for the application based the information received from the other of the application or the network.

In yet another aspect, a wireless communication apparatus operative in a communication network is provided. The apparatus includes a receiver configured to receive quality of service information from one of an application or a network for a first resource. A processor is included in the apparatus. The processor is configured to establish a communication flow based at least in part on the received quality of service information using the first resource. The apparatus further includes a second receiver configured to receive quality of service information from the other of the application or the network for the first resource. The processor further configured to modify the communication flow for the application based on the information received from the other of the application or the network.

In another aspect, another wireless communication apparatus operative in a communication network is provided. The apparatus includes means for receiving quality of service information from one of an application or a network for a first resource. The apparatus includes means for establishing a communication flow based at least in part on the received quality of service information using the first resource. The apparatus also includes means for receiving quality of service information from the other of the application or the network for the first resource. The apparatus further includes means for modifying the communication flow for the application based on the information received from the other of the application or the network.

In a further aspect, a non-transitory computer-readable medium comprising instructions executable by a processor of an apparatus is provided. The instructions cause the apparatus to receive quality of service information from one of an application or a network for a first resource. The instructions further cause the apparatus to establish a communication flow based at least in part on the received quality of service information using the first resource. The instructions also cause the apparatus to receive quality of service information from the other of the application or the network for the first resource. The instructions additionally cause the apparatus to modify the communication flow for the application based on the information received from the other of the application or the network.

Details of one or more implementations of the subject matter described in this specification are set forth in the accompanying drawings and the description below. Other features, aspects, and advantages will become apparent from the description, the drawings, and the claims. Note that the relative dimensions of the following figures may not be drawn to scale.

### BRIEF DESCRIPTION OF THE DRAWINGS

Figure 1 shows an example of a simplified diagram of a wireless communication system.
Figure 2 shows an example of a wireless communication system that facilitates end-to-end QoS that can be device-initiated or network-initiated in accordance with various aspects.
Figure 3 shows an example of a functional block diagram of an exemplary access terminal (AT) shown in Figure 2.
Figure 4 shows an example of a system that facilitates quality of service functions in a wireless communication network in accordance with one or more aspects.
Figures 5A-5B show examples of QoS states defined in a network;
Figures 6A-6B show exemplary signal flow diagrams illustrating signal flow exchanged among the various entities of Figure 2 for providing QoS flows.
Figure 7A-8B show further exemplary signal flow diagrams illustrating signal flow exchanged among the various entities of Figure 2 for providing QoS flows.
Figure 8 shows another exemplary signal flow diagram illustrating signal flow exchanged among the various entities of Figure 2 for providing QoS flows.
Figures 9A-9C show further exemplary signal flow diagrams illustrating signal flow exchanged among the various entities of Figure 2 for providing QoS flows.
Figure 10 shows an example of a method for handling QoS flows when a UE transitions from a source network to a target network.
Figures 11A-11B show further exemplary signal flow diagrams illustrating signal flow exchanged among the various entities of Figure 2 for providing QoS flows.
Figures 12A-12B show further exemplary signal flow diagrams illustrating signal flow exchanged among the various entities of Figure 2 for providing QoS flows.
Figures 13A-13B show further exemplary signal flow diagrams illustrating signal flow exchanged among the various entities of Figure 2 for providing QoS flows.
Figure 14 shows process flow diagram of an example method for establishing a QoS flow in a multimode communication network.
Figure 15 shows an example of a functional block diagram of various components in a communication system.
Figure 16 shows a functional block diagram of another exemplary wireless communication apparatus.
Figure 17 shows a signaling diagram for illustrating modification signals that may be exchanged between elements of a communication system.

In accordance with common practice the various features illustrated in the drawings may not be drawn to scale. Accordingly, the dimensions of the various features may be arbitrarily expanded or reduced for clarity. In addition, some of the drawings may not depict all of the components of a given system, method or device. Finally, like reference numerals may be used to denote like features throughout the specification and figures.

### DETAILED DESCRIPTION

Various aspects of implementations within the scope of the appended claims are described below. It should be apparent that the aspects described herein may be implemented in a wide variety of forms and that any specific structure and/or function described herein is merely illustrative. Based on the present disclosure a person/one having ordinary skill in the art should appreciate that an aspect described herein may be implemented independently of any other aspects and that two or more of these aspects may be combined in various ways. For example, an apparatus may be implemented and/or a method may be practiced using any number of the aspects set forth herein. In addition, such an apparatus may be implemented and/or such a method may be practiced using other structure and/or functionality in addition to or other than one or more of the aspects set forth herein.

The word "exemplary" is used herein to mean "serving as an example, instance, or illustration." Any implementation described herein as "exemplary" is not necessarily to be construed as preferred or advantageous over other implementations. The following description is presented to enable any person skilled in the art to make and use the invention. Details are set forth in the following description for purpose of explanation. It should be appreciated that one of ordinary skill in the art would realize that the invention may be practiced without the use of these specific details. In other instances, well known structures and processes are not elaborated in order not to obscure the description of the invention with unnecessary details. Thus, the present invention is not intended to be limited by the implementations shown, but is to be accorded with the widest scope consistent with the principles and features disclosed herein.

The techniques described herein may be used for various wireless communication networks such as Code Division Multiple Access (CDMA) networks, Time Division Multiple Access (TDMA) networks, Frequency Division Multiple Access (FDMA) networks, Orthogonal FDMA (OFDMA) networks, Single-Carrier FDMA (SC-FDMA) networks, etc. The terms "networks" and "systems" are often used interchangeably. A CDMA network may implement a radio technology such as Universal Terrestrial Radio Access (UTRA), cdma2000, etc. UTRA includes Wideband-CDMA (W-CDMA) and Low Chip Rate (LCR). cdma2000 covers IS-2000, IS-95 and IS-856 standards. A TDMA network may implement a radio technology such as Global System for Mobile Communications (GSM). An OFDMA network may implement a radio technology such as Evolved UTRA (E-UTRA), IEEE 802.11, IEEE 802.16, IEEE 802.20, Flash-OFDM", etc. UTRA, E-UTRA, and GSM are part of Universal Mobile Telecommunication System (UMTS). Long Term Evolution (LTE) is a release of UMTS that uses E-UTRA. UTRA, E-UTRA, GSM, UMTS and LTE are described in documents from an organization named "3rd Generation Partnership Project" (3GPP). cdma2000 is described in documents from an organization named "3rd Generation Partnership Project 2" (3GPP2). These various radio technologies and standards are known in the art.

Single carrier frequency division multiple access (SC-FDMA), which utilizes single carrier modulation and frequency domain equalization is one technique used in a wireless communication system. SC-FDMA has similar performance and essentially the same overall complexity as those of OFDMA system. SC-FDMA signal has lower peak-to-average power ratio (PAPR) because of its inherent single carrier structure. SC-FDMA has drawn great attention, especially in the uplink communications where lower PAPR greatly benefits the mobile terminal in terms of transmit power efficiency. It is currently a working assumption for uplink multiple access scheme in 3GPP Long Term Evolution (LTE), or Evolved UTRA.

Furthermore, in the following description, for reasons of conciseness and clarity, terminology associated with the Long Term Evolution (LTE) Evolved Universal Terrestrial Radio Access (E-UTRA) systems is used. The LTE E-UTRA technology is further described in the 3GPP TS 23.401: GPRS Enhancements for E-UTRAN Access (Release 8), which is hereby incorporated by reference in its entirety. It should be emphasized that the invention may also be applicable to other technologies, such as technologies and the associated standards related to Wideband Code Division Multiple Access (WCDMA), Time Division Multiple Access (TDMA), Orthogonal Frequency Division Multiple Access (OFDMA), Evolved High Rate Packet Data (eHRPD) and so forth. Terminologies associated with different technologies can vary. For example, depending on the technology considered, the User Equipment (UE) used in LTE can sometimes be called a mobile station, a user terminal, a subscriber unit, an access terminal, etc., to name just a few. Likewise, the Serving Gateway (SGW) used in LTE can sometimes be called a gateway, a HRPD serving gateway, and so forth. Likewise, the evolved Node B (eNB) used in LTE can sometimes be called an access node, an access point, a base station, a Node B, HRPD base station (BTS), and so forth. It should be noted here that different terminologies apply to different technologies when applicable.

Furthermore, in the following description, for reasons of conciseness and clarity, terminology associated with the evolved High Rate Packet Data (eHRPD) systems is also used. Aspects associated with networking between E-UTRAN and eHRPD are further described in the 3GPP2 X.S0057: E-UTRAN - eHRPD Connectivity and Interworking: Core Network Aspects, which is hereby incorporated by reference in its entirety. It should be emphasized that the invention may also be applicable to other technologies as previously described.

Quality of Service (QoS) generally refers to communication performance parameters, such as, a bit rate, delay, jitter, packet dropping probability and/or bit error rate, that a network delivers to an application (e.g., a software module, a set of instructions that may be executed on a processor, etc.). A particular application (e.g., a video decoding application) that runs on a mobile device that accesses a network may require a particular QoS level. The QoS level required by the application refers to a set of values for the QoS parameters that meet the requirements of the application. For example, voice is delay sensitive, so an application using the network for voice may require low latency. Accordingly, the QoS parameters may be set to guarantee the low latency requirement.

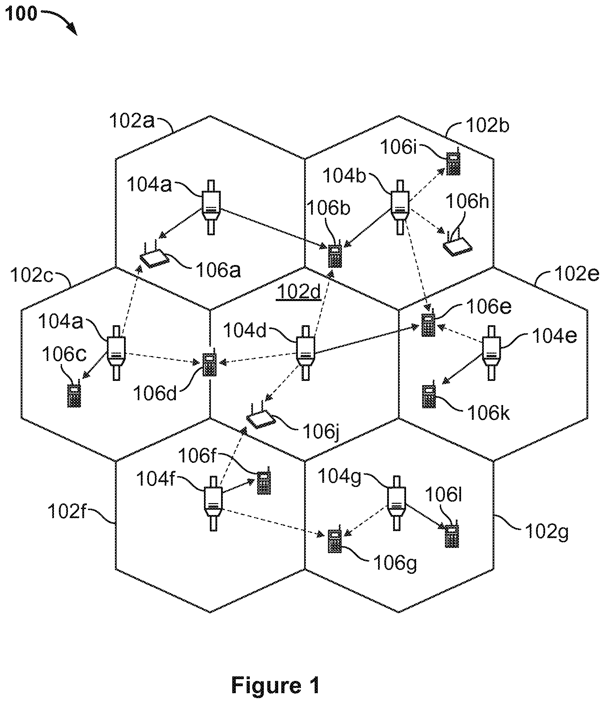

Figure 1 illustrates an exemplary wireless communication network 100. The wireless communication network 100 is configured to support communication between users. The wireless communication network 100 may be divided into one or more cells 102, such as, for example, cells 102a-102g. Communication coverage in cells 102a-102g may be provided by one or more nodes 104 (e.g., base stations), such as, for example, nodes 104a-104g. Each node 104 may provide communication coverage to a corresponding cell 102. The nodes 104 may interact with a plurality of access terminals (ATs), such as, for example, ATs 106a-1061.

Each AT 106 may communicate with one or more nodes 104 on a forward link (FL) and/or a reverse link (RL) at a given moment. A FL is a communication link from a node to an AT. A RL is a communication link from an AT to a node. The FL may also be referred to as the downlink. Further, the RL may also be referred to as the uplink. The nodes 104 may be interconnected, for example, by appropriate wired or wireless interfaces and may be able to communicate with each other. Accordingly, each AT 106 may communicate with another AT 106 through one or more nodes 104.

The wireless communication network 100 may provide service over a large geographic region. For example, the cells 102a-102g may cover only a few blocks within a neighborhood or several square miles in a rural environment. In one implementation, each cell may be further divided into one or more sectors (not shown).

As described above, a node 104 may provide an access terminal (AT) 106 access within its coverage area to another communications network, such as, for example the internet or another cellular network.

An AT 106 may be a wireless communication device (e.g., a mobile phone, router, personal computer, server, etc.) used by a user to send and receive voice or data over a communications network. An access terminal (AT) may also be referred to herein as a user equipment (UE), as a mobile station (MS), or as a terminal device. As shown, ATs 106a, 106h, and 106j comprise routers. ATs 106b-106g, 106i, 106k, and 1061 comprise mobile phones. However, each of ATs 106a-1061 may comprise any suitable communication device.

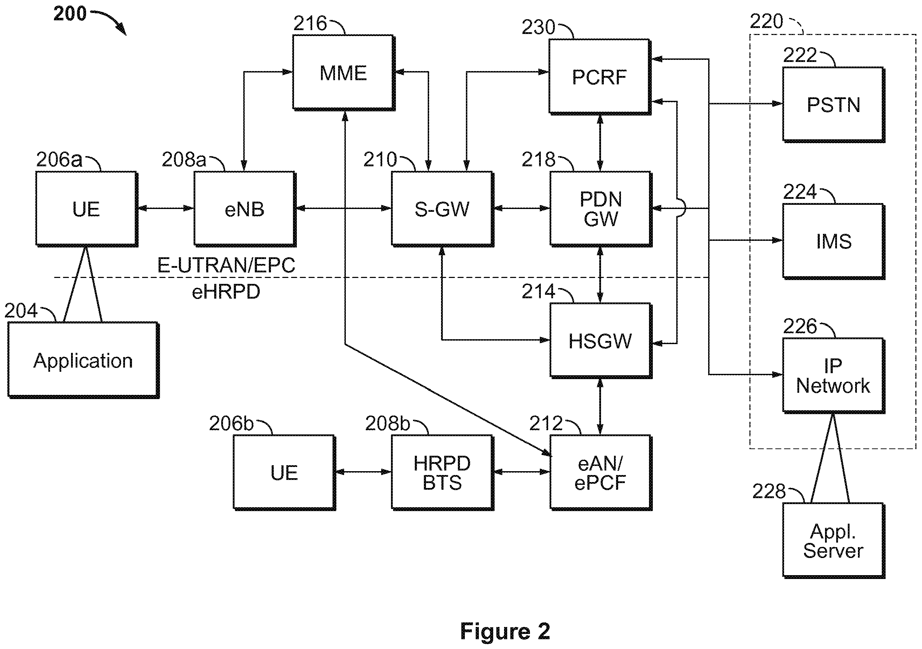

Figure 2 shows an example of a functional block diagram of certain communication entities of the communications network of Figure 1 which may facilitate end-to-end QoS for either device-initiated or network-initiated QoS in accordance with various aspects. The components shown in Figure 2 illustrate a system in which a multimode device may communicate using either an eHRPD network or an LTE network depending on the configuration of the network in the location in which the mobile device is currently operating. As Figure 2 illustrates, the system 200 may include a radio access network RAN that provides wireless radio communications between a UE 206a and an evolved NodeB (eNB) 208a (e.g., a base station, access point, etc.) according to a LTE network. The system also depicts a RAN which provides wireless radio communications between a UE 206b and a HRPD base transceiver station (BTS) 210 (e.g., a base station, access point etc.) according to an eHRPD network. For simplicity of discussion, Figure 2 depicts a UE 206a and one eNB 208a in a RAN and a UE 206b and one HRPD BTS 208b in another RAN; however, it is to be appreciated that each RAN may include any number of UEs and/or eNBs/HRPD BTSs. In accordance with one aspect, the eNB 208a and HRPD BTS 208b may transmit information to the UE 206a and/or the UE 206b over a forward link or downlink channel and the UE 206a and/or the UE 206b can transmit information to the eNB 208a and HRPD BTS 209b over a reverse link or uplink channel. As shown, RANs can utilize any suitable type of radio access technology such as, but not limited to, LTE, LTE-A, HSPA, CDMA, high rate packet data (HRPD), evolved HRPD (eHRPD), CDMA2000, GSM, GPRS, enhanced data rate for GSM evolution (EDGE), UMTS, or the like.

The RANs, and specifically the eNB 208a and HRPD BTS 208b, can communicate with a core network that enables charging (e.g., usage charges for services, etc.), security (e.g., ciphering and integrity protection), subscriber management, mobility management, bearer management, QoS handling, policy control of data flows, and/or interconnections with external networks 220. The RANs and core network can communicate via an S1 interface, for instance. The core network can include a mobility management entity (MME) 216 that can be an end-point for control signaling from the RAN 210. The MME 216 can provide functions such as mobility management (e.g., tracking), authentication, and security. The MME 216 can communicate with the RANs via the S1 interface. The core network can also include a serving gateway (S-GW) 210 which is a user plane node that connects the core network to the LTE RAN. The core network may also include a HRPD serving gateway (HSGW) which connects the core network to the eHRPD RAN. The eHRDP RAN also includes an evolved access node (eAN) and an evolved packet control function (ePCF) entity 212 which manages the relay of packets between the HRPD BTS 208b and the HSGW. In an aspect, the MME 216 can communicate with the S-GW 210 or the eAN/ePCF 212 via an S11 interface. Furthermore, the HSGW 210 and the S-GW 214 may communicate to facilitate interoperability between the eHRPD network and the EPC. In another aspect, the MME 216 and S-GW 210 can be configured as a single node to provide a single end-point for user and control signaling originating from a RAN and/or terminating at a RAN. The network may also include a policy and charging rules function (PCRF) 230 which may be used for establishing QoS flows. The PCRF 230 may communicate with the S-GW 210, the HSGW 214, the PDN GW 218 and the core network 220.

The core network can also include a packet data network (PDN) gateway (GW) 218 that facilitates communications between the core network (and the RANs) and external networks 220. The PDN GW 218 can provide packet filtering, QoS policing, charging, IP address allocation, and routing of traffic to external networks 220. In an example, the S-GW 210 and the PDN GW 218 can communicate via an S5 interface. While illustrated as separate nodes in Figure 2, it is to be appreciated that the S-GW 210 and PDN GW 218, for example, can be configured to operate as a single network node in order to reduce user plane nodes in core network 220.

As illustrated in Figure 2, the core network 220 can communicate with external networks 230 via the PDN GW 218. The external networks 220 can include networks such as, but not limited to, a public switched telephone network (PSTN) 222, an IP multimedia subsystem (IMS) 224, and/or an IP network 226. The IP network 226 can be the Internet, a local area network, a wide area network, an intranet, or the like.

According to an aspect, a UE 206a can include an application 204 which can initiate and utilize a communication session to transmit and receive data. In one example, the communication session can be between the application 204 and an application or server 228 associated with IP network 226. Accordingly, data exchanged during the communication sessions routes through the either the LTE eNodeB or the eHRPD RAN and the core network. The application 204 may be capable of specifying resource requirements necessary to ensure an acceptable user experience. The resource requirements can be guaranteed via initiating a QoS flow and associating the communication session with the QoS.

Further, a given application may require different levels of QoS at different times. For example, the first application for streaming video may have the ability to stream video from one or more data sources. The QoS level required to stream video from each of the one or more data sources may be different. In one implementation, a data source may require a higher QoS level than another data source due to transmission of higher quality video from the data source than from the other data source.

In another implementation, the network may be controlled by a service provider, such as, a network operator (e.g., Verizon®). The service provider may be, for example, a corporation that allows users of an AT 106a to access the network and data sources connected to the network. Further, each data source may be controlled by a different entity such as a corporation. The service provider may therefore contract with the various entities (e.g., content providers) that control the various data sources to provide a particular QoS level to a particular data source. The first application may then require a different QoS level for each data source depending on the QoS level assigned to the data source by the provider.

In one implementation, a "QoS-aware" application may run on the AT 106a and provide data content to a user of the AT 106a. The QoS-aware application may be able to identify the QoS level needed to request service from the network. The QoS-aware application may have logic to request a particular QoS level. For example, the QoS-aware application may have logic to communicate with QoS Application Programming Interfaces (APIs) on the AT 106a. These QoS APIs may be low-level logic or software that allows the AT 106a to request a particular QoS level. Therefore, an application that is QoS-aware may determine it needs a particular QoS level and communicate with the QoS APIs to request that QoS level. The AT 106a running the QoS-aware application may then configure the QoS level by exchanging EV-DO signaling messages with the AN 104a specifying a particular QoS level. The AN 104a and HSGW 214 may then setup the first link A1 (e.g., an A10 link) with the appropriate QoS level as discussed above. The HSGW 214 may then direct packets to the AN 104a over the setup first link A1 to achieve the appropriate QoS level. Further, the AN 104a may direct packets to the AT 106a over the appropriate data pipe 215a-215c to achieve the appropriate QoS level. In the scenario described above, the AT initiates the QoS level needed.

In contrast, in one implementation, the first application may not be able to identify the QoS level needed to request service from the network 205. For example, the first application may be a third party application (e.g., not provided by the manufacturer of the AT 106a) that does not contain the logic to request a particular QoS level. The first application may therefore be referred to as QoS-unaware or QoS-ignorant.

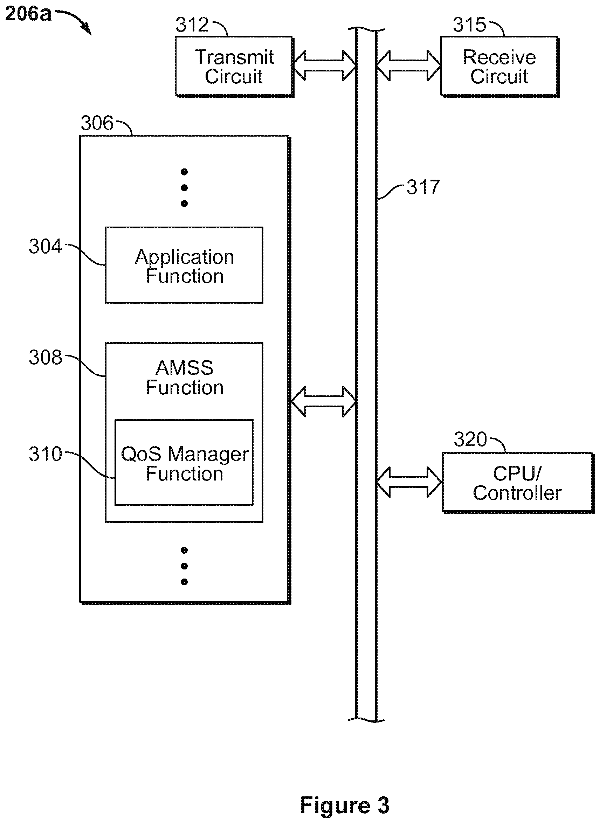

Figure 3 shows an example of a functional block diagram of an exemplary UE 206a shown in Figure 2. The UE 206a may be multimode, capable of operating using different radio access technologies (RATs) such as using LTE or eHRPD. The UE 206a may comprise a transmit circuit 312 configured to transmit an outbound message, such as a request for data from a data source. The UE 206a may further comprise a receive circuit 315 configured to receive an incoming message, such as a data packet from a data source. The transmit circuit 312 and the receive circuit 315 may be coupled to a central processing unit (CPU)/controller 320 via a bus 317. The CPU 320 may be configured to process the inbound and outbound messages coming from or going to an access node (e.g. the eNB 208a or the HRPD BTS 208b). The CPU 320 may also be configured to control other components of the UE 206a.

The CPU 320 may further be coupled to a memory 306 via the bus 317. The CPU 320 may read information from or write information to the memory 306. For example, the memory 306 may be configured to store inbound or outbound messages before, during, or after processing. The memory 306 may also comprise instructions or functions for execution on the CPU 320. For example, the memory 306 may comprise an application function 304, and an advanced mode subscriber software (AMSS) function 308. The AMSS function 308 may further include a QoS manager function 310. In the discussion below, the AMSS 308 may be referred to when describing various aspects of the QoS manager function 310. The operation of the CPU 320 executing each of these functions is described below.

The application function 304 may comprise instructions executable on the CPU 320 that when executed cause the CPU 320 of the UE 206a to process incoming data packets. For example, the application function 304 may comprise a video player application that requests and receives video data packets from a data source as described above with respect to Figure 2. The CPU 320 executing the application function 304 may process the incoming video packets in order to generate a video for a user of the UE 206a to view.

The QoS manager function 310 in the AMSS 308 may comprise instructions executable on the CPU 320. When executed, the QoS manager function 310 may cause the CPU 320 of the UE 206a to request a QoS level for receiving data packets from the data source. In one implementation, the CPU 320 executing the QoS manager 310 in the AMSS 308 processes or inspects incoming data packets.

The AMSS function 308 may comprise instructions executable on the CPU 320. The AMSS function 308 may act as an operating system driving the UE 206a. For example, the QoS manager 310 may interact with the AMSS function 308 to generate the filter message to setup the filter at the PDN 218.

The transmit circuit 310 may comprise a modulator configured to modulate outbound message going to the UE 206a. The receive circuit 315 may comprise a demodulator configured to demodulate inbound messages coming from the UE 206a.

The memory 306 may comprise processor cache, including a multi-level hierarchical cache in which different levels have different capacities and access speeds. The memory 306 may also comprise random access memory (RAM), other volatile storage devices, or non-volatile storage devices. The storage may include hard drives, optical discs, such as compact discs (CDs) or digital video discs (DVDs), flash memory, floppy discs, magnetic tape, Zip drives, etc.

Although described separately, it is to be appreciated that functional blocks described with respect to the UE 206a need not be separate structural elements. For example, the CPU 320 and the memory 306 may be embodied on a single chip. The CPU 320 may additionally, or in the alternative, contain memory, such as processor registers. Similarly, one or more of the functional blocks or portions of the functionality of various blocks may be embodies on a single chip. Alternatively, the functionality of a particular block may be implemented on two or more chips.

One or more of the functional blocks and/or one or more combinations of the functional blocks described with respect to the UE 206a, such as the CPU 320, the application function 304, the QoS manager 310, and the AMSS function 308, may be embodied as a general purpose processor, a digital signal processor (DSP), an application specific integrated device, discrete gate or transistor logic, discrete hardware components, circuitry or any suitable combination thereof designed to perform the functions described herein. In this specification and the appended claims, it should be clear that the term "circuitry" is construed as a structural term and not as a functional term. For example, circuitry can be an aggregate of circuit components, such as a multiplicity of integrated circuit components, in the form of processing and/or memory cells, units, blocks, and the like, such as shown and described in Figure 3. One or more of the functional blocks and/or one or more combinations of the functional blocks described with respect to the UE 206a may also be implemented as a combination of computing devices, e.g., a combination of a DSP and a microprocessor, a plurality of microprocessors, one or more microprocessor in conjunction with a DSP communication, or any other such configuration.

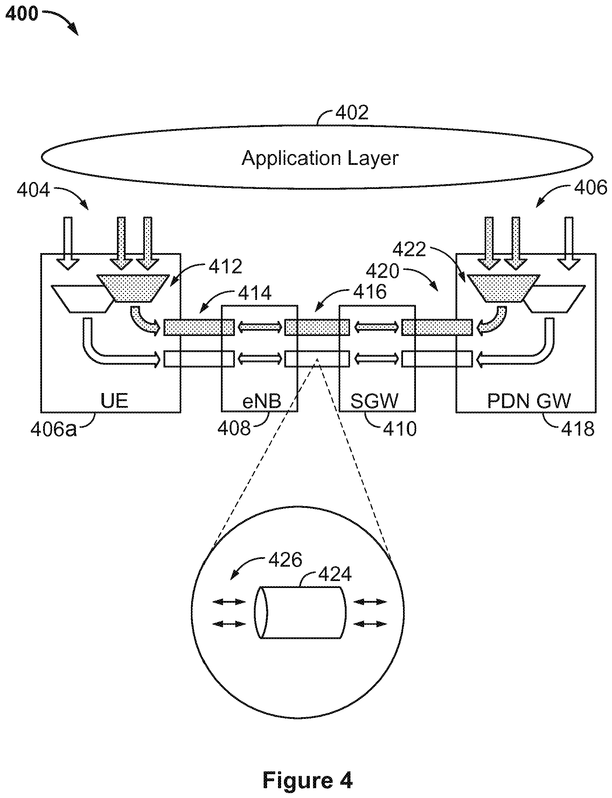

Figure 4 is an example of a system 400 that facilitates quality of service (QoS) functions in a wireless communication network in accordance with one or more aspects. Communications between applications can occur via a protocol at the application layer 402. For instance, a communication session between application 204 and application/server 228 can occur via the application layer 402, for example, by a session initiation protocol (SIP). While interactions can between applications can be conceptualized at a level of the application layer 402, actual data is exchanged via transport layers, data layers, and/or physical layers provided by a radio access network and/or a core network as depicted in Figure 3.

In an aspect, QoS parameters can be applied to an information flow (e.g., data exchanged between applications during a communication session) to provide acceptable end-user experience through guaranteeing resources that meet certain requirements. In one example, an evolved packet system (EPS) bearer can be utilized to apply QoS parameters to the information flow. The EPS bearer is a logical concept that applies between a mobile device (e.g., UE 406a) and the PDN GW 418. The EPS bearer can include sub-bearers such as radio bearer 414 between UE 406a and eNB 408. The radio bearer 414 can be a radio link control (RLC) connection between the UE 406a and eNB 408 over the radio interface. In one aspect, one RLC connection can be associated with one radio bearer. Another sub-bearer of the EPS bearer can be a S1 bearer 416 which tunnels packets between the eNB 408 and a S-GW 410. In addition, a S5 bearer 420 can tunnel packets between the S-GW 410 and the PDN GW 418.

The EPS bearer encapsulates one or more data flows between UE 406a and the PDN GW 418. For instance, service data flows 404 originating from the application layer 402 of UE 406a and/or service data flows associating with the application layer of the PDN GW 418 or an external application can be encapsulated in the EPS bearer. It is to be appreciated that one or more EPS bearers can be established between UE 406a and PDN GW 418. While Figure 3 depicts two EPS bearers, it is to be appreciated that there can N bearers, where N is an integer greater than or equal to one. As shown in the break-out portion of Figure 3, a portion 424 of the EPS bearer is shown.

In accordance with an example, each EPS bearer can be associated with a single QoS context or profile. For instance, each EPS bearer can be characterized by a set of parameters that specify QoS. The set of parameters can include an allocation retention priority (ARP), a guaranteed bit rate (GBR), a maximum bit rate (MBR), and a QoS class identifier (QCI). Data flows that receive similar QoS treatment can be grouped or encapsulated into a same EPS bearer. In an example, the break-out portion of Figure 3 depicts a portion 424 of an EPS bearer. The EPS bearer 424 is illustrated as encapsulating several data flows 426. As the several data flows 426 are associated jointly with EPS bearer 424, the several data flows 426 receive similar QoS treatment wherein the QoS treatment is defined at least in part on the set of parameters characterizing the EPS bearer 424.

Turning back to Figure 2, an EPS bearer or QoS can be established to convey a data flow between application 204 of UE 206a and application/server 228 in the IP network. The EPS bearer or QoS context extends from the UE 206a to the PDN GW 218 at which point the PDN GW 218 routes packets from UE 206a to the IP network 226. In addition, the PDN GW 218 obtains packets from the IP network 226 and routes them to the UE 206a in accordance with QoS parameters of the EPS bearer encapsulating the data flow.

In an aspect, the EPS bearer or QoS can be initiated by the application 204 or UE 206a. When initiated by the application or UE 206a, the QoS can be identified as a UE-initiated QoS. In another aspect, the EPS bearer or QoS can be initiated by the network (e.g., by the PDN GW 218, MME 216, and/or the S-GW 210). Situations in which QoS is device-initiated and situations in which QoS is network-initiated can be distinguished based at least in part on preference of the application, preference of the network, capability of the application, and/or capability of the network, as will be discussed below.

According to an example, application 204 can be a third party application (e.g., not provisioned by an operator of network) which is QoS-unaware. In some cases, a network may be configured to provide QoS for a QoS-unaware application, while in other cases the network may not be configured to provide QoS for a QoS-unaware application. Furthermore, operator provisioned applications may be QoS-aware. In one case, QoS-aware applications may have been written for UE-initiated QoS and configured for 1x/HRPD networks which only supported UE-initiated QoS. Other QoS-aware applications may also be written to support and prefer network-initiated QoS if available, but may also be written to support UE-initiated QoS.

As described above, different wireless communication technologies may support different QoS deployment mechanisms. For example, an operator may employ a wide area network which uses multiple RATs, such as eHRPD and LTE, as depicted in Figure 2. An eHRPD network may be capable of UE-initiated QoS, whereas an LTE network may be capable of network-initiated QoS. In this network, some locations may only be configured to support UE-initiated QoS, some locations may only be configured to support network-initiated QoS, while some locations may be configured to support both. It should be appreciated that although the discussion below discusses eHRPD and LTE, other RATs may also be employed in the network and which may be consistent with the disclosure provided herein. As just described, multimode UEs that operate in the network may have applications which are QoS-aware and which either require or are written to take advantage of QoS initiated by the network and/or initiated by the UE. Other applications are QoS-unaware and do not require QoS and may rely on best-effort flows or QoS initiated independently by the network as described above. As a UE moves through the network with different QoS capabilities, applications depending on one type of QoS may cease to function. These applications and new applications might otherwise have to be written/rewritten to support different QoS mechanism associated with various parts of a network. To avoid this, certain aspects of this disclosure provide for minimizing the impact on and awareness of different types of applications to the QoS capabilities of the network. In one aspect, the disclosure describes systems and methods for providing QoS flows to application regardless of the specific type of QoS mechanism employed by the network (e.g. regardless of whether the network supports UE-initiated or network-initiated QoS). Seamless mobility from the point of view of the application may be provided when a UE moves between one part of the network that supports UE-initiated QoS and another part of the network that supports network-initiated QoS or both. In this manner, legacy applications written for one type of QoS capability may not have to be written and new applications may rely on a consistent model regardless of the type of QoS mechanism employed.

As described above, a QoS flow is considered to be a UE-initiated QoS flow if it is initially established at the specific request of the UE. The UE-initiated QoS flow may remain a UE-initiated QoS flow until it is released, even if the network modifies the associated QoS flow metrics. The QoS metrics may include packet filters and flow profile IDs for eHRPD, or packet filters and QCIs for E-UTRA. A QoS flow is considered to be a network-initiated QoS if it is initially pushed by the network. The network-initiated QoS flow may also remain a network-initiated QoS flow until it is released, even if an application invokes an API to get a handle to the QoS flow or the application requests to modify the associated QoS flow metrics. For a network-initiated QoS flow, the UE does not have the capability of modifying packet filters or releasing the QoS flow.

In an overall system supporting multiple QoS mechanisms, a UE may be configured to support network-initiated QoS flow establishment and flow deletion initiated by the network. The UE may additionally support modification of certain QoS parameters initiated by the network for already configured network-initiated QoS flows. These parameters may include, but are not limited, to packet filters, flow profile IDs, packet filters (e.g., 5-tuple or less), precedences and/or packet filters for QoS flows eHRPD, or packet filters (e.g., 5-tuple or less) and QCIs for E-UTRA. When a UE receives a network-initiated QoS establishment request, the UE may perform filter matching with the existing QoS flows. If the requested network-initiated QoS parameters match (e.g. by performing a bitwise matching operation) both the packet filter and the precedence of any existing QoS flow, the UE may reject the request and continue employing the existing flows. The UE may be further configured to attach to a network that does not support network-initiated QoS.

In order for an application to receive and indicate information about a QoS flow, an API may be provided for allowing communication about different QoS events and states. For example, an application may register a notification callback (along with sending the AMSS 308 requested packet filters) with the AMSS 308. The AMSS 308 invokes this callback to notify the application of events associated with different network-initiated QoS states. Events regarding network-initiated QoS states may be similar for what are defined by UE-initiated QoS states such that the fact that network-initiated QoS is being used is transparent to an application operating under the assumption that UE-initiated QoS is being used. Network-initiated QoS events may include QoS-activate, QoS-suspend, QoS-failure, QoS-modify-success, QoS-modify-fail, or QoS-release. The AMSS 308 is configured to perform filter matching (further described below) when it receives IP data packets from the application. If a given packet matches more than one of the packet filters, the filter of the highest precedence may be chosen. It may also be noted that on eHRPD, the RL reservation may be turned on and off by the AMSS 308 for network-initiated QoS flows.

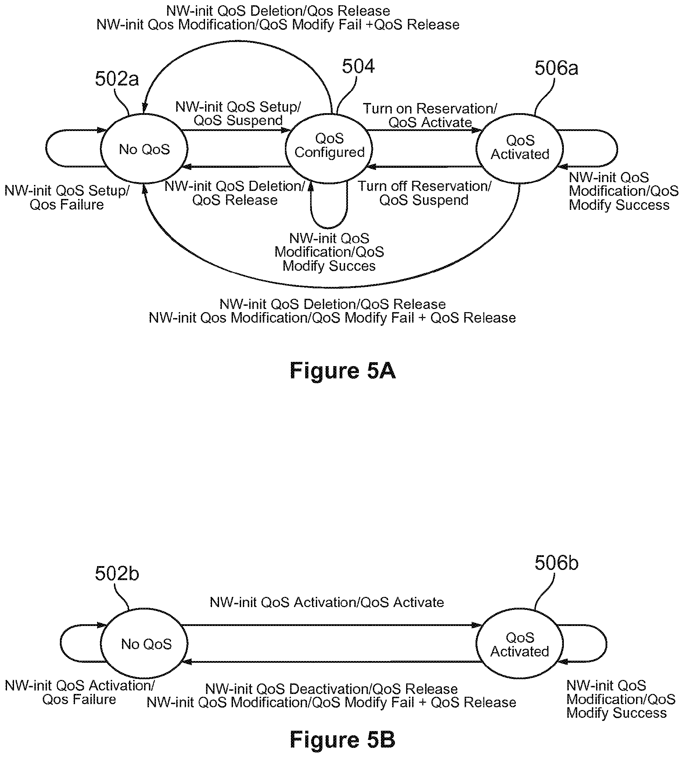

Three high level QoS states may be defined for eHRPD which are depicted in Figure 5A. The "No QoS" state 502a may correspond to when no QoS context is established. The "QoS Activated" state 506a may correspond to the situation when the following conditions are satisfied. First a radio QoS request is accepted by an eAN 212 successfully. Second, radio link protocol (RLP) and the reverse link traffic channel MAC (RTCMAC) bindings are substantially complete (i.e. RLP and RTCMAC are active). Third, that RSVP messaging is successful, and fourth, that the RL reservation is turned on. The "QoS Configured" state 504 may correspond to the situation when the radio QoS request is accepted by an eAN 212 successfully and RSVP messaging was successful, but the other conditions corresponding to the "QoS Activated" state have not been met. When QoS is in the "QoS Configured" state, the RL reservation is in the closed state, and RLP and RTCMAC binding and activation procedures may or may not have been performed. By successfully turning on the RL reservation (and successfully completing the RLP and RTCMAC binding and activation procedures, if "Early Reservation On" feature is used), the state transitions from the "QoS Configured" state 504 to the "QoS Activated" 506a state. Since the RL reservation for network-initiated QoS flows is turned on when receiving data from the application, a QoS-aware application may be allowed to send packets to the AMSS 308 when the QoS is in either the "QoS Configured" 504 or the "QoS Activated" 506a state. Based on the QoS state and the QoS procedures performed, the AMSS 308 may provide notifications about QoS states/events to the application that registered a notification callback. The various QoS procedures corresponding to each QoS state followed by the QoS notifications sent by the AMSS 308 to the application for eHRPD are illustrated in Figure 5A.

Two high level QoS states may be defined for E-UTRA which are depicted in Figure 5B. The "No QoS" state 502b may correspond to when no QoS context is established. The "QoS Activated" state 506a may correspond to when the EPS bearer is activated successfully. Based on the QoS state and the QoS procedures performed, the AMSS 308 may provide notifications about QoS states/events to the application that registered a notification callback. The various QoS procedures corresponding to each QoS state followed by the QoS notifications sent by the AMSS 308 to the application for E-UTRA are illustrated in Figure 5B.

For both the QoS states defined for eHRPD and the QoS states defined for E-UTRA, multiple notifications to the application may occur during a network-initiated QoS modification procedure. For example, if the network-initiated QoS flow is modified successfully, the application may receive notifications of QoS-suspend, QoS-modify-success, and QoS-activate. If the network-initiated QoS flow modification fails, the application may receive notifications of QoS-suspend, QoS-modify-fail, and QoS-release.

### Packet Filter Matching

When the AMSS 308 receives an IP packet or a QoS establishment request from an application 304 or the network, the AMSS 308 performs packet filter matching. The AMSS 308 may check the packet filter against the IP packet being transmitted or against the packet filter included in the QoS request from the application. The following packet filter elements, if present, may be exactly matched against the IP packet or the QoS request received: The PDN-ID that is connecting to the APN, the source IP address, the source port number, the destination IP address, the destination port number and the type of service (TOS)/differentiated services code point (DSCP). Furthermore, the AMSS 308 may also check the precedence value in the case when the AMSS 308 receives a QoS push from the network. It should be appreciated that the packet filter matching may provide for matching a wide variety of filter and packet criteria in the process of matching QoS parameters specified by the application and QoS parameters set by a network.

### Reverse Traffic Processing

As discussed above, the AMSS 308 may be configured to process IP packets transmitted from an application 304. In such an implementation, the AMSS 308 may be configured to perform packet filter matching. The AMSS 308 may be configured to check the 5-tuple packet filter content against the IP packet received from the application. If a packet filter match is found, then the packet is sent to the link flow that is associated with the Flow Identifier corresponding to the matched packet filter. If a given packet matches more than one of the packet filters (including possible wildcard matches), the packet filter of highest precedence shall be selected. If no packet filter match is found, then the packet may be sent to a flow which defines a best effort filter.

### QoS Request Processing and Duplicate Flow Detection

As discussed above, the AMSS 308 may be configured to process IP packets transmitted from a network. In such an implementation, the AMSS 308 may be configured to perform packet filter matching. The AMSS 308 may receive a NW-init QoS setup request. The AMSS 308 may be configured to consider a duplicate flow detected if the 5-tuple packet filter content, if present in the packet filter included in the QoS signaling, and the precedence are bitwise matched any existing QoS flow.

When the AMSS 308 receives a QoS setup request from the application, the AMSS 308 may be configured to perform packet filter matching. When receiving a UE-init QoS setup request, the AMSS 308 shall consider a duplicate flow detected if the 5-tuple packet filter content, if present in the packet filter included in the QoS request, is bitwise matched any existing QoS flow.

During eHRPD PPP resync, the QoS context is released locally in the UE. In some implementations, it may be desirable for the network to re-initiate establishing the NW-init QoS flows.

### Network-initiated QoS Interaction with QoS-Unawawe Applications

For applications which are classified as QoS-unaware, UE-initiated QoS procedures are not applicable as the application may never request or initiate QoS. However, the application may still be provided a specified QoS by the network if the network is using network-initiated QoS. Once the UE has established a connection to the PDN 218, a QoS-unaware application may be activated and start sending data. The AMSS 308 may perform filter matching and determine that there is no QoS flow established by the network for sending data. As a result, the AMSS 308 may send the data using best-effort flow. Subsequently, the network may initiate network-initiated QoS procedures to establish a QoS flow. The AMSS 308 may set up packet filters, but applications may not register for notifications from the AMSS 308 that a QoS flow has been established. If the UE is operating in an eHRPD network, incoming data from the application may trigger the AMSS 308 to turn on the RL reservation. Since the QoS flows are configured by the network (and the RL reservation has been activated in an eHRPD network), the data may be sent out using the network initiated QoS flows. In this scenario, the application may be completely unaware that data is being sent on the network configured QoS flow.

### Network-initiated QoS Interaction with QoS-Aware Applications

QoS-aware applications may be categorized to be either QoS-required or QoS-preferred. For QoS-required applications, QoS configuration and activation are required for the application to function. If the QoS configuration or activation fails, the application may block sending any data. For QoS-preferred applications, if the QoS configuration or activation fails, the application may proceed with sending data using a best-effort flow. As described above, a QoS-aware application may register a notification callback (along with providing requested packet filters) with the AMSS 308. The AMSS 308 may invoke this callback to notify the application of QoS events according to network-initiated QoS states. As described above these events may include, QoS-activate, QoS-suspend, QoS-failure, QoS-modify-success, QoS-modify-fail and QoS-release. Furthermore, the AMSS 308 may return QoS flow parameters (e.g., flow profile IDs, QCIs). In some implementations, the AMSS 308 may include these parameters using a metrics field of the event notification. Furthermore, the QoS-aware application may be able to query and receive QoS state and/or parameters from the AMSS 308 along with other information, such as metrics for the flow.

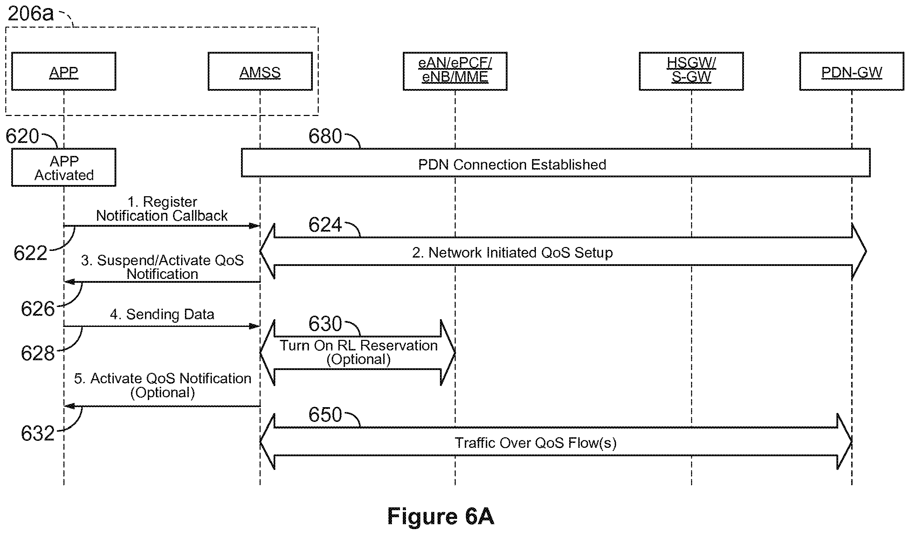

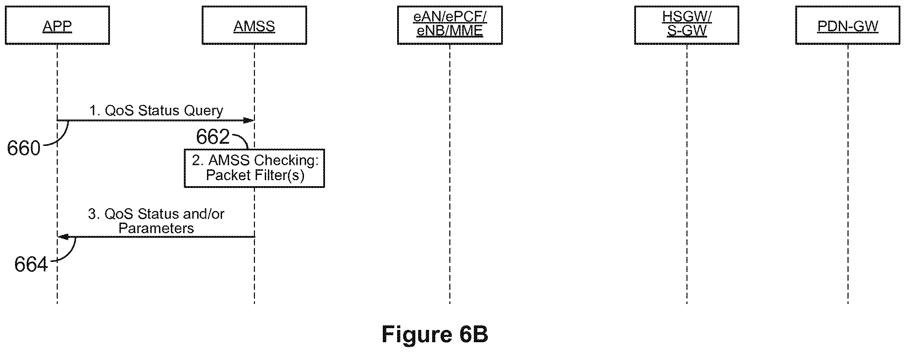

Figure 6A shows an exemplary signal flow diagram illustrating signal flow exchanged when a QoS-aware application registers a notification callback with the AMSS 308 and a QoS flow is also pushed by the network. In this case, the UE may be either connected to a network configured for eHRPD or E-UTRA. In Figure 6, and the figures described below, messages are sent back and forth between the AMSS 308 and the Application 304. Messages are also sent between the AMSS 308 and across various nodes of the communication network as described in Figure 2. When the UE is connected to a network configured for eHRPD QoS flows may be established through communication between the AMSS 308, the eAN/ePCF 212, the HSGW 214, the PDN-GW 218, and the PCRF 230 network entities. When the UE is connected to a network configured for E-UTRAN, QoS flows may be established through communication between the AMSS 308, the eNB/MME 208a and 216, the S-GW 210, the PDN-GW 218, and the PCRF 230 network entities. At block 620m the application is activated. Block 680 indicates signaling to establish a connection between the AMSS 308 and the PDN-GW 218. A QoS-aware application may transmit a registration signal 622 to register a callback function with the AMSS 308. If the application is a QoS-preferred application, the application may send the data using the best-effort flow. If the application is a QoS-required application, the application may block sending data until a QoS flow is configured successfully. Sometime after the application registers the callback notification 622, the network may determine to initiate a QoS service flow and network-initiated QoS setup procedures 624 are performed and packet filters are setup in the AMSS 308 for the QoS flow. In some implementations, the registration process may include the application providing an additional parameter to the AMSS 308 to control the timing of the reservation. For example, in an eHRPD system, the application may provide an "immediate-reservation-on" parameter. If the application indicates Immediate-Reservation-On, the AMSS 308 may be configured to immediately request to turn on the reservation after the network-init QoS setup is complete, without any trigger (such as from the application). If this parameter is not set, or set to off, the AMSS may be configured to wait to turn on the reservation for the requesting application. An additional interface may be provided by the AMSS 308 to allow the application to turn on the reservation. For example, the application may transmit a signal to the interface indicating the reservation should be turned on. This may be desirable in implementations where the reservation is not automatically turned on, or may be suspended by either the AMSS 308 or the application.

The AMSS 308 then performs filter matching to determine whether the filter established by the network initiated QoS flow matches the filters registered by the application. If the filter matches, the AMSS 308 notifies the application by sending a QoS-activate message or a QoS-suspend message 626 when QoS activation is needed. If the UE is operating in a network configured for E-URTAN, the application may proceed to send data over the established network-initiated QoS flow. If the UE is operating in a network configured for eHRPD, the AMSS 308 may carry out procedures with the eAN to turn on the RL reservation 630 when the AMSS 308 receives data 628 from the application. Upon turning on the RL reservation, the AMSS 308 may also notify the application by sending a QoS-activate event message 632. The QoS flow(s) are now ready to send packets for the application. Additionally, if the UE is operating in a network configured for eHRPD and the RL reservation is not turned on successfully, the AMSS 308 may attempt to activate the RL reservation the next time that the AMSS 308 receives data from the application until the RL reservation is activated successfully.

In addition, the provided API may be expanded to allow an application to query the AMSS 308 for QoS status and/or parameters as illustrated in Figure 6B. Once the application is activated and a connection to the PDN has been established, the application may use an API to query 660 the AMSS 308 for QoS status and/or parameters with the requested filters. The AMSS 308 then performs filter matching and compares existing packet filters with the requested filters at block 662. If an existing filter matches the application queried filter, then the AMSS 308 notifies the application of the QoS status along with providing the application with the accompanying QoS metrics 664. Otherwise, if there is no packet filter that matches the application queried filter, the AMSS 308 notifies the application that there is not an appropriately configured QoS flow (corresponding to the "No QoS" state).

### Coexistence of UE-initiated and Network-initiated QoS

According to certain aspects, systems and methods are provided which support the coexistence of UE-initiated and network-initiated QoS. Table 1 below illustrates the operations that may be completed on network-initiated QoS and UE-initiated QoS flows in a network where the coexistence of both UE-initiated and network-initiated QoS are both supported.

**Table 1**

| **Operator** | | **Operations initiated by Network** | | | **Operations initiated by UE** | | |
|---|---|---|---|---|---|---|---|
| Operation | | Modify packet filter (5-tuple or less) and/or precedence | Modify FlowProfil eID/QCI | Delete QoS flow | Modify packet filter (5-tuple or less) and/or precedence | Modify FlowProfil eID/QCI | Delete QoS flow |
| QoS flow | NW-init QoS flow | Allowed | Allowed | Allowed | Not allowed | Allowed | Not allowed |
| | UE-init QoS flow | Allowed | Allowed | Allowed | Allowed | Allowed | Allowed |

As shown in Table 1, operations of modifying and deleting a QoS flow initiated by the network are allowed for both network-initiated QoS flows and UE-initiated flows. Furthermore, operations of modifying and deleting a QoS flow initiated by the UE are allowed for UE-initiated QoS flows. However, operations of modifying a packet filter and deleting a QoS flow may not be allowed for a network-initiated QoS flow when initiated by the UE.

Furthermore, a filter precedence field may be present in the RSVP message sent by the network to the UE during the network-initiated QoS establishment procedure. This information field may be used to prioritize the packet filters between the network-initiated and UE-initiated QoS flows. The network may set the UE-initiated and network-initiated QoS flow precedence values to avoid having the same precedence value for any two flows for the same UE IP address.

Where both UE-initiated and network-initiated QoS are both supported, if the application calls the "Request QoS" API, the AMSS 308 may perform filter matching with the existing network-initiated QoS flows. If the requested UE-initiated QoS flow matches (e.g. by performing a bitwise match operation) the packet filter of any existing network-initiated QoS flow, the AMSS 308 may link the existing filter to the application. The application may thus obtain a handle to the network-initiated QoS flow and the handle may be available until the QoS context is released. Meanwhile, the AMSS 308 may treat the QoS request as a modification of the QoS metrics of the network-initiated QoS flow. For example, if the UE is currently in a part of the network configured for e-HRPD the QoS request may be treated as a modification of the flow profile.

A process for UE QoS modification of network-initiated QoS metrics (i.e. the flow profile ID) is described below. First, the AMSS 308 may determine whether the RAN-granted profile of the existing network-initiated QoS flow is the most preferred in the requested profile set, and that the requested profile set is a subset of the HSGW-authorized profile set of the network-initiated QoS (i.e., ProfileSet_{Requested} ⊆ ProfileSet_{Authorized}) [hereinafter described as Condition 1]. If this condition is satisfied, the AMSS 308 may notify the application of a "QoS-activate" or "QoS-suspend" event without proceeding with a QoS modification attempt because the currently requested profiles were authorized by the HSGW before and the RAN is likely to grant the same profile as the currently used profile. If the above condition is not satisfied, the AMSS 308 may proceed to attempt a QoS modification of the existing network-initiated QoS flows.

In attempting QoS modification where Condition 1 has not been satisfied, the AMSS 308 may determine whether the requested profile set is a subset of the HSGW-authorized profile set of the network-initiated QoS flow (i.e. ProfileSet_{Requested ⊆} ProfileSet_{Authorized}). If this is satisfied, (note that both lists may be treated as unordered lists when checking the condition) then the AMSS 308 may determine not to perform the QoS check and only perform radio QoS modification, where the requested profile set is set at a higher priority than the other profile sets. If the above condition is not satisfied (e.g., the requested profile set is not a subset of the authorized profile) then the AMSS 308 may perform a union operation of the ProfileSet_{Requested} and the ProfileSet_{Authorized} (e.g., ProfileSet_{Requested} ∪ ProfileSet_{Authorized}) and then proceed to run a "Modify QoS" operation with the resulting set from the "QoS check." When the UE sends the resulting profile set to the network in the "QoS Check" process and/or radio QoS configuration set, the UE may specify the requested profile set as a higher priority than the rest. Table 2 below provides pseudo-code for process described above.

**Table 2**

| |
|---|
| [Condition 1] The RAN-granted Profile of the existing NW-init QoS flow is the most preferred in the requested Profile set, and the requested Profile set is a subset of the HSGW-authorized Profile set of the existing NW-init QoS flow i.e. ProfileSet_{Requested} ⊆ ProfileSet_{Authorized} |
| If Condition 1 is satisfied |
| Then return QoS Activate/Suspend (no modification) |
| Else (i.e., Condition 8.1 is not satisfied) |
| If ProfileSet_{Requested} ⊆ ProfileSet_{Authorized} (as unordered lists) |
| Then skip QoS Check and only perform radio QoS modification (with the requested Profile set put in the higher priority than the rest) |
| Else |
| Perform ProfileSet_{Requested} ∪ ProfileSet_{Authorized} and Perform QoS modification with the resulted Profile set from QoS Check (with the requested Profile set put in a higher priority than the rest) |
| End |
| End |

Using eHRPD, if the application requests to modify the QoS metrics and the "QoS Check" fails, the AMSS 308 may retain the old QoS metrics and notify the application of "QoS-suspend" or "QoS-activate." If the traffic flow template (TFT) setup or radio QoS setup fails, the AMSS 308 may abandon the QoS and notify the application of QoS-release. Furthermore, on eHRPD, the AMSS 308 may allow the network to modify the precedence of a UE-initiated QoS flow during QoS setup procedures. For example, if the network assigns a new precedence value in the ResvConf message with OpCode "QoS Check Confirm," the UE may set up the TFTs with the modified precedence. If an application has a handle to a network-initiated QoS flow, the AMSS 308 may allow the application to delete the handle but may not allow deleting a network-initiated QoS flow. Additionally, the AMSS 308 may not allow an application to modify packet filters associated with a network-initiated QoS, but may allow the application to modify the flow profile ID or QoS class index (QCI) associated with the network-initiated QoS flow. The AMSS 308 may also allow the network to modify the packet filter, the precedence and the flow profile ID associated with the UE-initiated QoS flow.

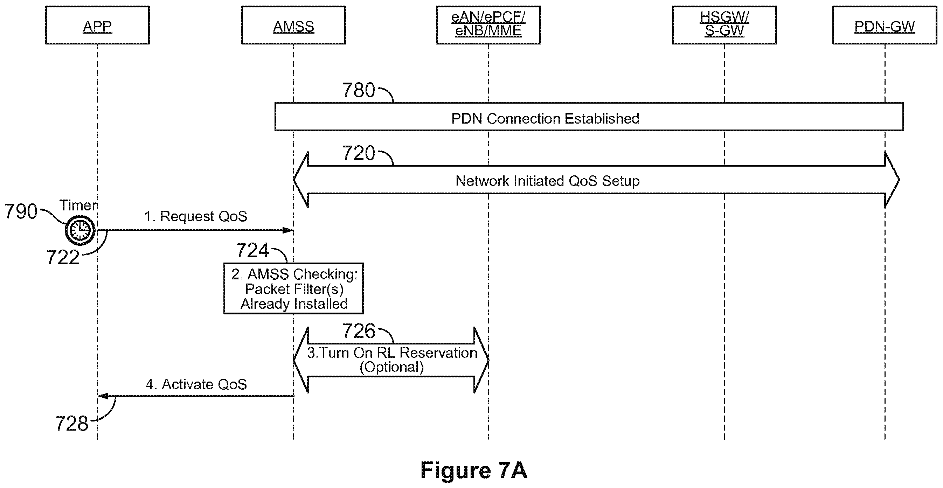

According to the discussion above, several different use scenarios will now be described to illustrate how a wireless system may support an associated QoS-aware application may function in a network which supports the coexistence of both UE-initiated and network-initiated QoS. Figure 7A shows an exemplary signal flow diagram illustrating signal flow exchanged when a QoS-aware application requests QoS and the QoS has already been configured by the network. In this scenario, Condition 1 in Table 2 is found to be satisfied, that is, the RAN-granted profile of the existing network-initiated QoS flow is the most preferred in the profile set and the requested profile set is a subset of the HSGW-authorized profile set of the existing network-initiated QoS flow. Once a connection 780 between the AMSS 308 and the PDN-GW has been established, the network may initiate and establish a QoS flow 720. A QoS-aware application may sometime thereafter call the "Request QoS" API 722. In response, the AMSS 308 may check if the requested packet filters have already been installed by matching the requested packet filter 724 against the packet filter or filters installed as part of establishing the network-initiated QoS flow 720. The AMSS 308 performs a check to see that Condition 1 of Table 2 is satisfied, and as described above, Condition 1 is found to be satisfied in this case. If the UE is operating in a part of the network configured for eHRPD, the AMSS 308 may turn on the RL reservation if not already activated 726. Finally, regardless of whether eHRPD is being used, the AMSS 308 may send an "Activate QoS" event message to the application by invoking an "Activate QoS" callback 728.

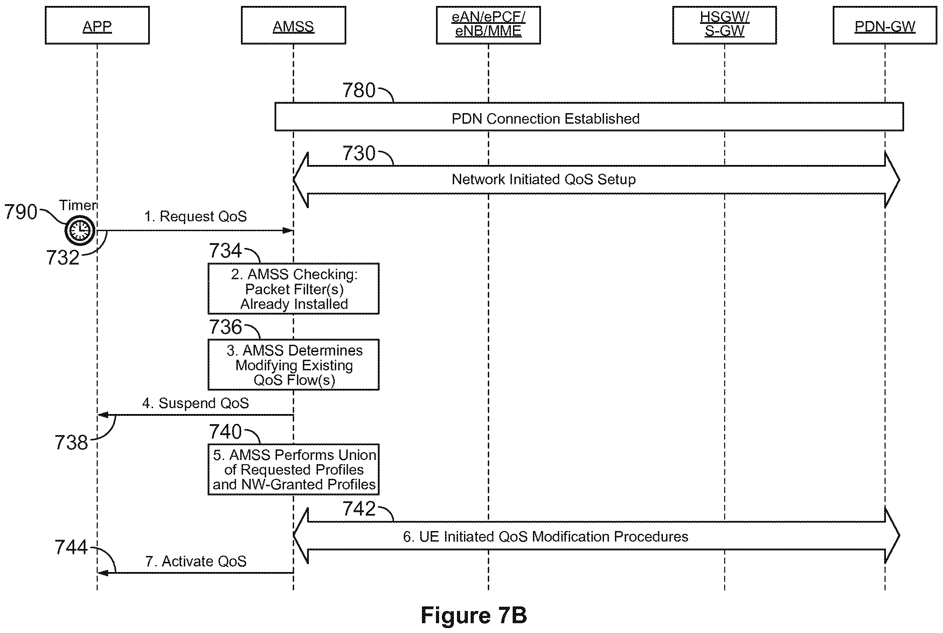

In some situations, as illustrated in Figure 7B, Condition 1 in Table 2 may not be satisfied, that is, either the RAN-granted profile of the existing NW-init QoS flow is not the most preferred in the profile set or the requested profile set is not a subset of the HSGW-authorized profile set of the existing network-initiated QoS flow. If this is the case, the AMSS 308 may proceed with QoS metrics modification of the established network-initiated QoS flow. As illustrated in Figure 7B, once a connection 780 to the PDN has been established, the network may initiate and establish a QoS flow 730. Sometime thereafter, a QoS-aware application may call the "Request QoS" API 732 to the AMSS 308. At this instance, the application may start a timer 790. The AMSS 308 may check to see if the packet filter or filters requested by the application have already been installed or configured by performing filter matching 734 as described previously. If the installed packet filters match the requested packet filters, the AMSS 308 considers the requested packet filters have already been installed by the network-initiated QoS procedure and the AMSS 308 may determine whether Condition 1 in Table 2 is satisfied. In this case, the AMSS 308 determines that the condition is not satisfied and therefore determines to perform UE-initiated QoS modification procedures 736. As a result, the AMSS 308 notifies the application of a "Suspend QoS" event 738. The AMSS 308 may then determine to perform a union operation of the requested profile/QCI set and the HSGW/S-GW-authorized profile/QCI set of the existing QoS flow 740. The AMSS 308 then performs the UE-initiated QoS modification procedure 742, to modify the existing QoS flows. In the course of the QoS modification procedure, the UE may list the requested profile/QCI set in the beginning of the profile/QCI set transmitted to the network. If modification is successful, the AMSS invokes the callback function to send a "QoS-activate" event to the application 744.

Figures 7A-7B apply to situations in which the network has already initiated the establishment of QoS flows and existing packet filters have been setup by the AMSS 308 when a QoS-aware application calls the "Request QoS" API. In other scenarios, the QoS-aware application may determine it needs QoS and call the "Request QoS" API before there are any established QoS flows.

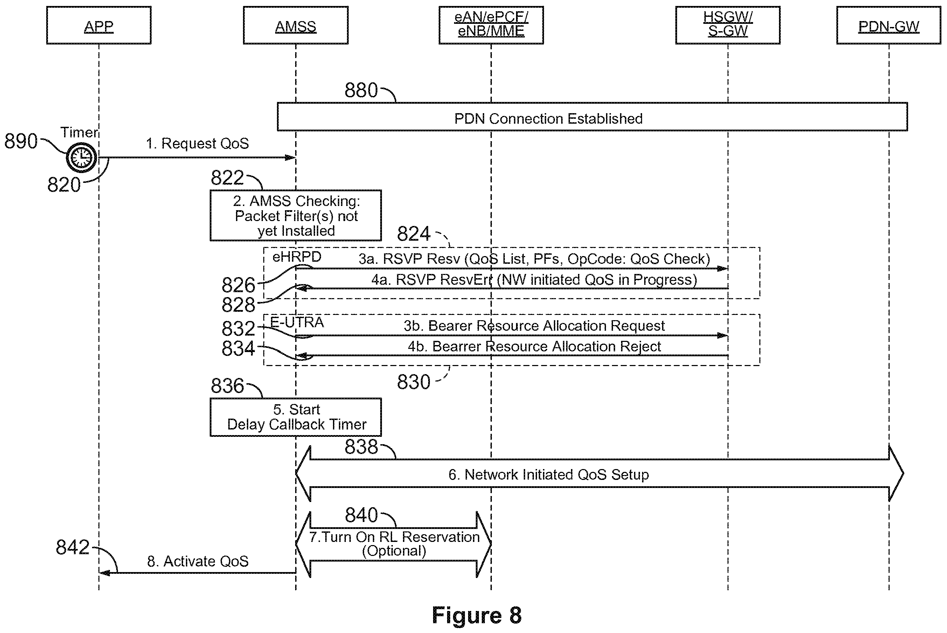

Figure 8 shows an exemplary signal flow diagram illustrating signal flow exchanged when a QoS-aware application requests QoS when QoS has not been configured. As illustrated in Figure 8, once a connection to the PDN has been established 880, an application may call the "Request QoS" API 820 before any existing QoS flows have been established. The AMSS 308 may check if the application requested packet filter or filters are currently installed by performing filter matching against any existing filters at block 822. In this case, as no QoS flow has been established, the AMSS 308 may determine that the packet filters are not yet installed. The AMSS 308 may then proceed to establish the QoS flow depending on the QoS capabilities of the UE's current RAT.

If the UE is located in part of a network configured for eHRPD 824, the UE may send an "RSVP Resv" message 826 to the HSGW 214. If the network is setting up QoS for the flows for which the UE is attempting to setup through the RSVP message, the HSGW 214 may respond with an "RSVP ResvErr" message 828 with an error code specifying that network-initiated QoS setup procedures are in progress. If this error code is received, the AMSS 308 may start a configurable delay-callback-timer 890. This timer 890 may define a period of time (e.g., in seconds) counted from the time when the UE receives an error from the network. The application may wait to report any error to the application until the timer expires. Thus, the timer 890 is started so that the UE may be configured to wait for the network to push QoS before notifying the application. The UE may maintain the requested QoS context and links to the application until after the timer expires. If the application is a QoS-preferred application, as described above, the application may send data using the best-effort flow before any QoS flows are configured and activated. If the application is a QoS-required application, the application may block sending data until a QoS flow is activated successfully.

If the UE is located in part of a network configured for LTE 830, the UE may send the non-access stratum (NAS) message "BEARER RESOURCE ALLOCATION REQUEST" 832. The network may respond with the NAS message "BEARER RESOURCE ALLOCATION REJECT" message 834. In LTE, because there is no "network-initiated QoS in progress" code, the AMSS 308 may start the delay-callback-timer 890 when receiving any error from the network. As described above, the timer configures a period of time in which to wait until providing notifications to the application of the requested QoS flow status.

After the delay-callback-timer 890 has started, network-initiated QoS procedures may be performed by the network 838 and packet filters may be set in the AMSS 308. If the UE is located in part of a network configured for eHRPD, the AMSS 308 may turn on the RL reservation 840 for network-initiated QoS. The AMSS 308 then notifies the application by invoking the "Activate QoS" callback 842 as the QoS flows have been activated and are ready to be used by the application to exchange packets.

In some situations, the delay-callback-timer 890 described above in Figure 8 may time out or expire while waiting for the network to push QoS. In this situation, once the timer has expired, the AMSS 308 may notify the application of the failure to setup a QoS flow by sending a "Failure QoS" message to the application. In this situation, the QoS context is released. If the application has registered the notification callback as described above, the application may receive a QoS notification from the AMSS 308 sometime later when the network pushes the QoS.

Similarly, an application may set its own timer configured to time the amount of time in which the application may be configured wait until a QoS flow has been configured. In this situation, the application timer may expire before the steps to establish a QoS flow are performed. The application may notify the AMSS 308 of the timeout event and the AMSS 308 may release the QoS context. As described above, if the application has registered the notification callback, the application may receive a QoS notification if the network later successfully establishes a QoS flow that the application can use.

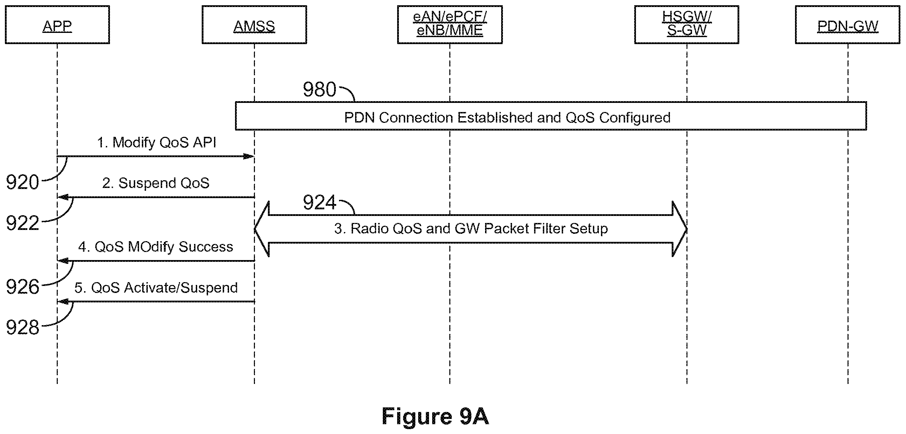

The modification process described above applies to situations in which the application is requesting a QoS flow that does not exactly match a established network-initiated QoS flows. In addition, once a QoS flow has been established for an application, a QoS-aware application may subsequently wish to modify the already configured QoS flow. The QoS flow to be modified may be either UE-initiated or network-initiated; however, the AMSS 308 may not allow an application to request modifying the filters of an already configured network-initiated QoS flow. These modifications are illustrated in Figures 9A-9C. In Figure 9A, once a PDN connection has been established and a QoS flow configured 980, the application may call a "Modify QoS" API 920 associated with the AMSS 308. In response, the AMSS 308 may notify the application of a "QoS-suspend" event 922. The AMSS 308 and the network may then exchange messages 924 to setup radio QoS flows and packet filter's based on the modified parameters from the application. If the QoS modification was successful, the AMSS 308 may notify the application of a "QoS-modify-success" event 926. The AMSS 308 may then notify the application of a "QoS-suspend" or "QoS-activate" event depending on the QoS state before the modification 928, as the QoS flows have been successfully modified.

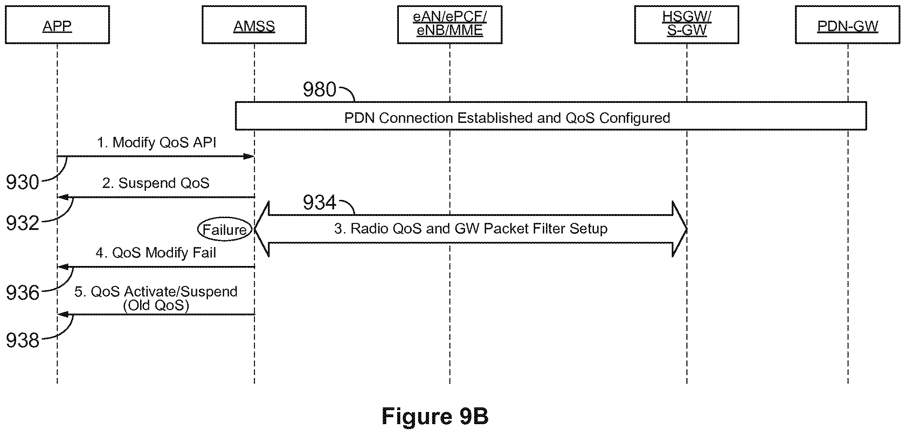

Figure 9B shows an exemplary signal flow diagram illustrating signal flow exchanged when an application's request to modify a QoS flow fails. In Figure 9B, once a PDN connection has been established and a QoS flow configured 980, the application may call a "Modify QoS" API 930 associated with the AMSS 308. In response, the AMSS 308 may notify the application of a "Suspend QoS" event 932. The AMSS 308 and the network may exchange messages 934 to attempt to setup radio QoS flows and packet filters based on the modified parameters from the application. However, in this case the modification fails. If the UE is located in part of the network configured for LTE, any type of failure could trigger this event. If the UE is located in part of the network configured for eHRPD, a "QoS Check" procedure failure may trigger this event. Once a failure is detected, the AMSS 308 may notify the application of a "QoS-modify-fail" event 936. Rather than releasing the previous QoS flow, the AMSS 308 may notify the application of a "QoS-activate" or "QoS-suspend" event 938 based on the existing QoS flow and depending on the QoS state before modification. Thus, in the scenario illustrated in Figure 9B, while the QoS modification fails due to the errors described above, the application may continue to use the previous unmodified QoS flow.

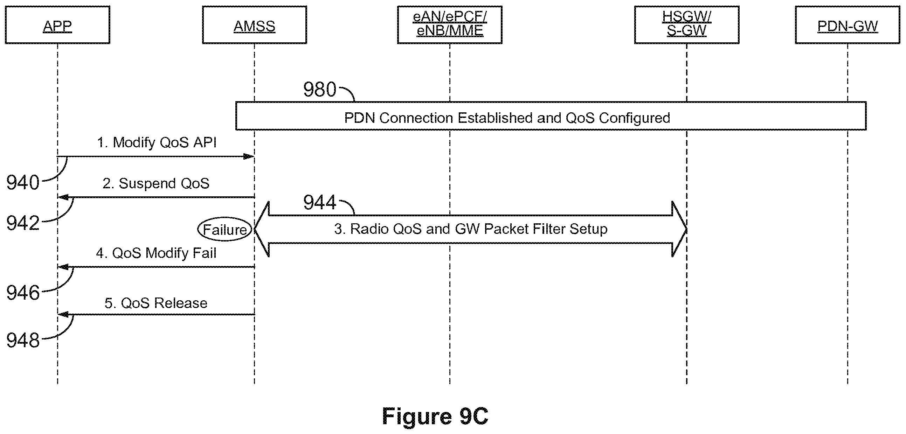

Figure 9C shows another exemplary signal flow diagram illustrating signal flow exchanged when the network's fails to modify a QoS flow requested by an application, and for which the QoS flow may need to be released after the modification attempt. If the UE is located in part of the network configured for eHRPD, a radio QoS configuration failure or TFT setup failure may trigger this response. In Figure 9C, signaling 980 between the AMSS 308 and the PDN-GW 218 cause a PDN connection to be established and a QoS flow configured, the application may call a "Modify QoS" API 940 associated with the AMSS 308. In response, the AMSS 308 may notify the application of a "Suspend QoS" event 942. The AMSS 308 and the network may then exchange messages to attempt to setup radio QoS flows and packet filter's based on the modified parameters from the application 944. However, the modification may fail due to, for example, a radio QoS configured failure or a TFT setup failure 944. Once a failure is detected, the AMSS 308 may notify the application of a "QoS-modify-fail" event 946. In response to the failure, the existing QoS flow is released and the AMSS 308 then notifies the application of the "QoS-release" event 948.

### QoS Mobility Scenarios

As a mobile device moves through a communications network employing different RATs, the QoS capabilities of certain parts of the network may be different according to what is supported for each RAT. For example, as described above, one location in a network may be configured for LTE while another location may be configured for eHRPD. As such, each network may have different operator policies for QoS initialization configuration and may support only network-initiated QoS, UE-initiated QoS, or a combination of both. In response, a network may need to support different types of QoS-applications which may expect a certain QoS configuration as a multimode mobile device transitions between the different RATs. For example, a UE operating an application expecting UE-initiated QoS may transition to a target network that only supports network-initiated QoS. As described by the discussion below, the overall network may be designed to handle the transition so that QoS applications may continue to function regardless of the particular QoS capabilities of the part of the network to which the UE is transitioning. In some situations, the network may be designed so that the transition is seamless and an application expecting only one type of QoS mechanism may be ignorant of the underlying QoS mechanism actually employed by the part of the network in which the UE is transitioning to. It may also be noted that in some situations, such as in eHRPD, a H1/H2 context transfer may be supported and as such, the full context in the source HSGW including PPP, authentication, IP, QoS, lifetime, and related information may be transferred to the target HSGW.

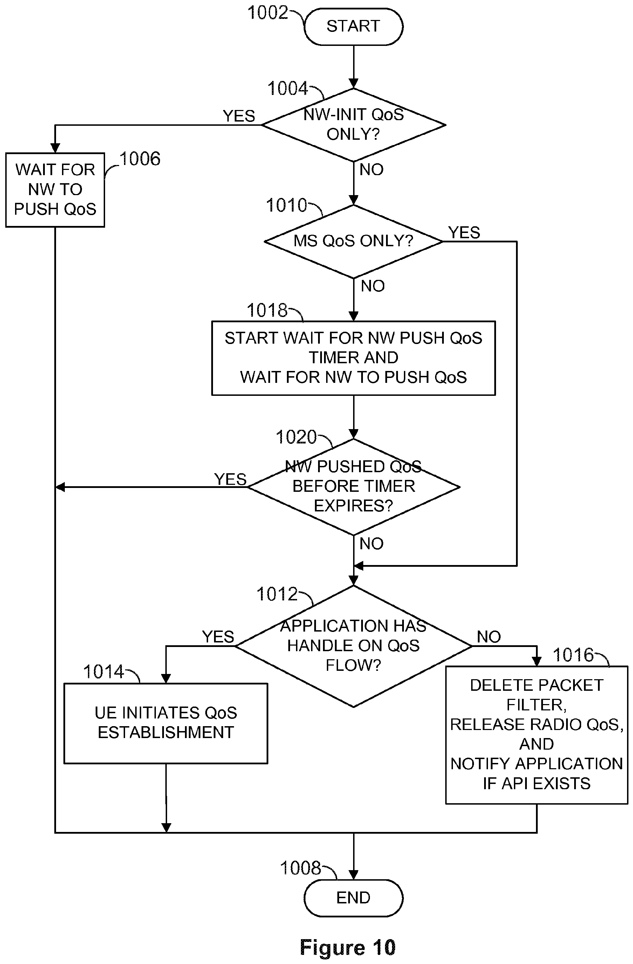

Figure 10 shows an example of a method for handling QoS flows when a UE transitions from a source network to a target network. Figure 10 provides a high level flow diagram illustrating an example of how an overall network may handle transitions to parts of a network with different QoS capabilities. At block 1002, the flow starts when a UE with a running application using a configured QoS flow transitions from one part of the network, the source/original network, to a target network. When the transition happens, depending on the QoS capabilities of the networks, the UE may be configured to take different actions.

At decision block 1004, the UE determines if the target network supports only network initiated (NW-init) QoS flows. In this case, the target network does not allow the UE or an application of the UE to determine QoS communication flows. As such, at block 1006, the UE waits for the target network to provide the QoS flow information. Once obtained, the flow ends at block 1008.

Returning to decision block 1004, if it is determined that the target network does not support only network initiated QoS flows, the process continues to decision block 1010. At decision block 1010, it is determined if the target network supports mobile station (MS) QoS flows only. If the target network supports only MS QoS flows only, the UE (or application of the UE that is using the communication flow) may provide the QoS communication flow information to the target network. In this case, the process continues to decision block 1012 where a determination of whether the application has a handle on the QoS flow is made. If the application has a handle on the QoS communication flow, the information may be sent to the target network to establish the QoS flow with the target network. Accordingly, at block 1014, the UE initiates establishment of the QoS communication flow by transmitting at least part of the QoS communication flow information it has a handle to. Once established, the flow ends at block 1008. In one example, the network may determine that the current network is only capable of UE-initiated QoS from a selected bearer control indicator (BCM) during the vendor specific network control protocol (VSNCP) procedure. If the target network's QoS capability is both UE-initiated and network-initiated QoS (or network-initiated QoS only) 1006, the flow continues at block 1008 where the UE may start a timer which is configured to set a period of time to wait for the target network to push a QoS flow for the application. The UE then waits for the target network to push a QoS flow for the application. At block 1010, the UE determines whether the network has pushed a QoS flow before the timer has expired. If the target network has pushed the QoS flow before the time expires then the application may use the established QoS flow in the target network and the flow ends at block 1022. If the timer expires before the target network has pushed a QoS flow, the method proceeds at block 1012 if the target network is capable of both UE-initiated and network-initiated QoS.

Block 1012 is used either when the target network is only capable of UE-initiated QoS or if the target network failed to push QoS before the timer expired and the target network additionally supports UE-initiated QoS. In block 1012, the target network determines whether the application has a handle to the QoS flow. If the application does have a handle, the UE initiates QoS establishment as shown in block 1014. Once the UE successfully initiates a QoS establishment the flow ends at block 1008.

Returning to decision block 1012, if the application does not have a handle to the QoS flow, the flow continues at block 1016 where the AMSS 308 may delete the packet filter of the original network, release the radio QoS flow, and/or notify the application of a "QoS release" event. In some implementations this may be triggered by a notification callback signal as described herein. In some implementations, the notification of the event may be omitted. For example in implementations that do not include notification callbacks (e.g., the API does not exist), the notification may be suppressed. Once the processing is complete, the flow ends at block 1008.

Returning to decision block 1010, if the target network does not support UE initiated QoS flows only, the target network supports both network and UE initiated QoS flows. In this case, the process continues to block 1018 where a wait for network push of QoS information timer is started. The UE may be configured to wait a pre-determined amount of time for the network to push QoS communication flow information.

At decision block 1020, it is determined whether the target network has pushed QoS communication flow information to the UE before the expiration of the pre-determined amount of time. If the network has successfully provided QoS information, this information is used by the UE/application to continue processing. Accordingly, the flow ends at block 1008.

Returning to decision block 1020, if the target network fails to successfully push the QoS communication flow information to the UE prior to the expiration of the pre-determined period of time, the flow continues to block 1012 as described above. In this case, the UE/application may be configured to attempt to establish the flow, if possible.

When a UE with an established QoS flow transitions from one radio access technology (RAT) to another, the QoS flow may either be released during the transition or suspended during the transition. If the QoS is released during the transition, the UE may locally release the QoS context over the source domain when it leaves the source RAT and notify the application of a "QoS-release" event. The application may then perform QoS failure handling. After transitioning to the target RAT, the UE may consider whether to establish a QoS context over the target new domain. If the QoS is suspended during transition, the UE may notify the application of a "QoS-suspend" event when it leaves the source RAT. The UE may then locally release the QoS context over the source domain. After the UE transitions to the target RAT and the QoS context is established over the target domain, the UE may replace the old QoS context with the new QoS context and notify the application of a "QoS Configure" or "QoS-activate" event.

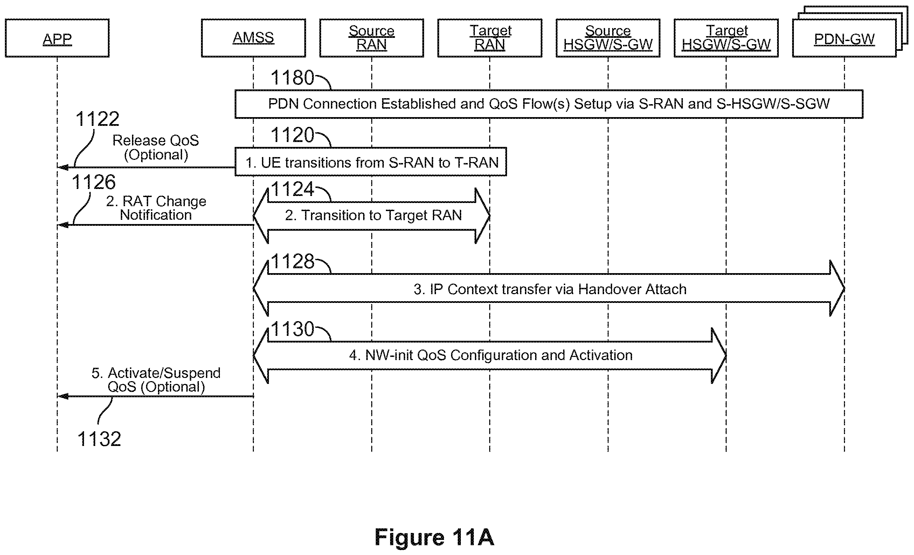

Figure 11A shows an exemplary signal flow diagram illustrating signal flow exchanged when a UE with an established QoS flow transitions to a target network that supports network-initiated QoS, where the QoS is released during the transition, and the target network successfully pushes the QoS over the target network. In Figure 11A, the UE may have set up a connection to the PDN and established a QoS flow through the source-RAN and the source-HSGW/S-GW. Furthermore, a PPP session may be established if the UE is in a location of the network configured for eHRPD. The QoS is also set up for the bearer over a PDN connection 1180 with an APN. The UE then transitions from the source-RAN to the target-RAN 1120 and selects a target-HSGW/S-GW. This may be an active handoff or a dormant handoff. The AMSS 308 may then locally release the QoS context established on the source network. The AMSS 308 may then notify the application of a "QoS-release" event 1122 if the API is established for the UE. Once the transition 1124 takes place, the AMSS 308 may send a RAT change notification 1126 to the application. If the target network is configured for eHRPD, the UE may create a PPP session and perform extensible authentication protocol authentication and key agreement (EAP-AKA) authentication. If the target network is configured for E-UTRA, the UE may perform an E-UTRA attach procedure. The UE performs IP context transfer via the handover attach procedure 1128 for each PDN connection that it has attachments to within the source RAN. Once the transition is complete, the QoS is pushed by the network through the network-initiated QoS configuration and activation procedures 1130. After the QoS flow or flows are activated and configured successfully, the AMSS 308 may notify the application of a "QoS-activate" or "QoS-suspend" event 1132 if the API described above is being used by the application. The QoS flow is now configured and may now be used by the application in the target network supporting network-initiated QoS.

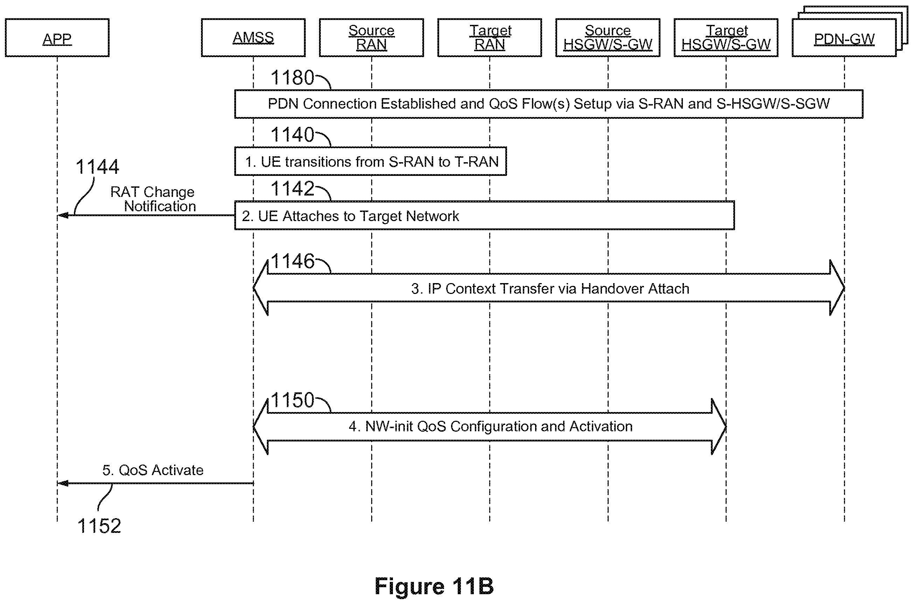

Figure 11B shows an exemplary signal flow diagram illustrating signal flow exchanged when a UE with an established QoS flow transitions to a target network that supports network-initiated QoS, where the QoS is suspended during the transition, and the target network successfully pushes the QoS over the target network. In Figure 11B, the UE may have set up a connection to the PDN and established a QoS flow through the source-RAN and the source-HSGW/S-GW. The QoS is also set up for the bearer over a PDN connection 1180 with an APN. The UE then transitions 1140 from the source-RAN to the target-RAN and selects a target-HSGW/S-GW. This may be an active handoff or a dormant handoff. In some implementations, the AMSS 308 may notify the application of a "QoS-suspend" event if the application has setup a notification callback as described above.

The UE then attaches to the target network at block 1142. If the target network is configured for eHRPD, the UE may create a PPP session and perform EAP-AKA authentication. If the target network is configured for E-UTRA, the UE may perform an E-UTRA attach procedure. In some implementations the AMSS 308 may transmit a radio access technology (RAT) change notification signal 1144 to the application. The UE performs IP context transfer via the handover attach procedure 1146 for each PDN connection that it has attachments to within the source RAN. Once the transition is complete and upon learning that the target network is both UE-initiated and network-initiated QoS capable, the AMSS 308 may be configured to start a timer (wait-for-network-to-push-QoS-timer) if the QoS flow was a network-initiated QoS flow in the original network and the target network is only capable of network-initiated QoS. The network then successfully pushes a QoS flow through the network-initiated QoS configuration and activation procedure 1150 before the timer expires. After the QoS flow or flows are configured successfully, the AMSS 308 may notify the application of a "QoS-Active" event 1152 and the target network's established QoS flow will be available to the application.

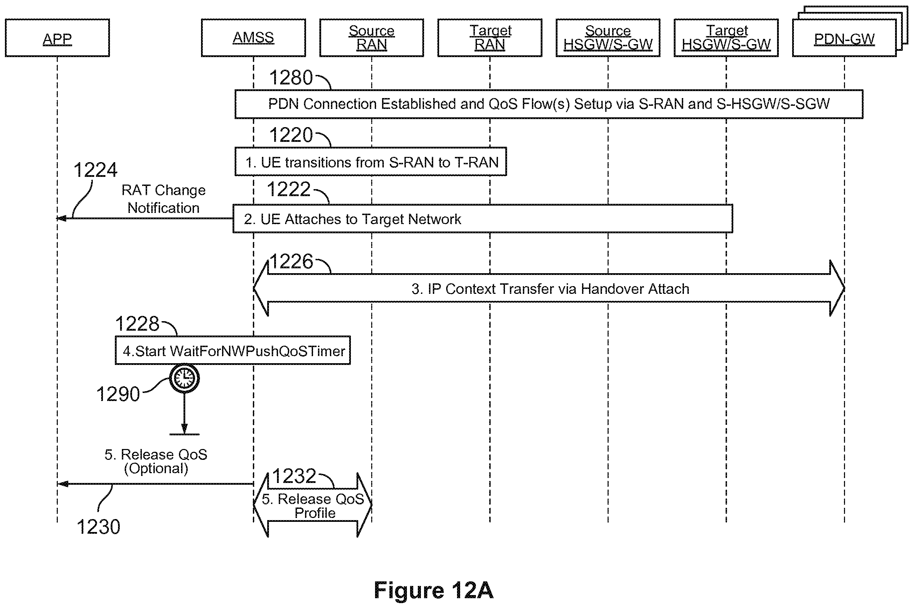

Figure 12A shows an exemplary signal flow diagram illustrating signal flow exchanged when a UE with an established QoS flow transitions to a target network that supports network-initiated QoS, where the QoS is suspended during the transition, but where the target network does not successfully push the QoS in the target network. In Figure 12A, the UE may have set up a connection to the PDN and established a QoS flow through the source-RAN and the source-HSGW/S-GW. The QoS is also set up for the bearer over a PDN connection 1280 with an APN. The UE then transitions from the source-RAN to the target-RAN 1220 and selects a target-HSGW/S-GW. This may be an active handoff or a dormant handoff. In some implementations, the AMSS 308 may then notify the application of a "QoS-suspend" event for example if the application has setup a notification callback as described above.

The UE then attaches to the target network at block 1222. If the target network is configured for eHRPD, the UE may create a PPP session and perform EAP-AKA authentication. If the target network is configured for E-UTRA, the UE may perform an E-UTRA attach procedure. In some implementations the AMSS 308 may transmit a radio access technology (RAT) change notification signal 1224 to the application. The UE performs IP context transfer via the handover attach procedure 1226 for each PDN connection that it has attachments to within the source RAN. Once the transition is complete and upon learning that the target network is both UE-initiated and network-initiated QoS capable, the AMSS 308 may start a timer (wait-for-network-to-push-QoS-timer) 1228 if the QoS flow was a network-initiated QoS flow in the original network and the target network is only capable of network-initiated QoS. In this case, the timer may expire while the QoS has not successfully been pushed by the network. In this situation the AMSS 308 may release the QoS profile 1230. If the application has registered a notification callback with the AMSS, the AMSS 308 may notify the application of a "QoS-release" event 1232.

Some of the scenarios discussed above include releasing the QoS profile during the transition. In many situations, it may be preferable to maintain QoS during transitions between a source RAT and a target RAT. After transition, if a target network supports UE-initiated QoS, the AMSS 308 may initiate QoS establishment without the intervention of the application for the QoS flow if the application has a handle to the QoS flow and the AMSS 308 has the RAN-specific QoS parameters for this QoS flow. If a QoS modification procedure is initiated by either the UE or the network during handoffs, the QoS modification may be postponed until the QoS mobility procedures are complete.

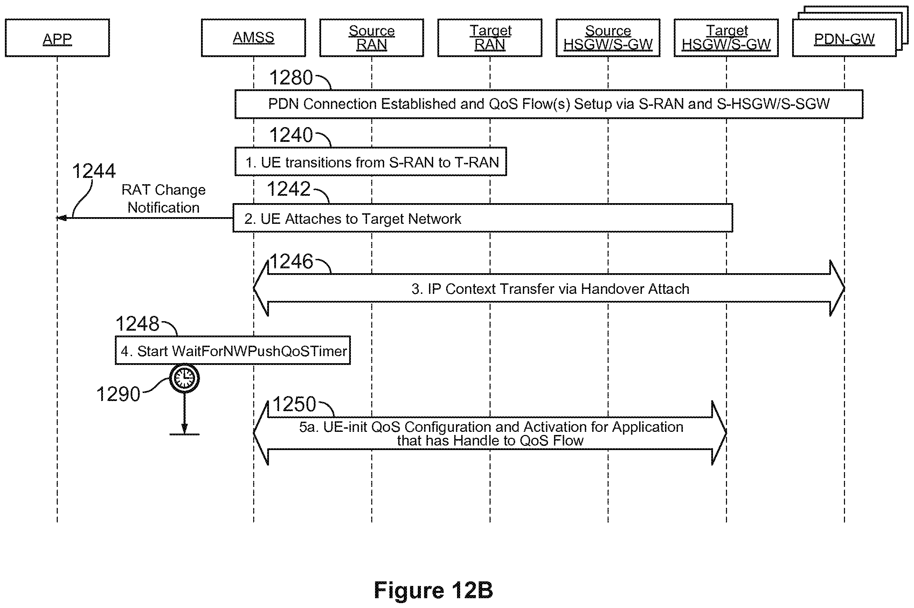

Figure 12B shows an exemplary signal flow diagram illustrating signal flow exchanged when a UE with an established QoS flow transitions to a target network that supports both UE-initiated and network-initiated QoS, where the QoS is suspended during the transition, but where the target network does not successfully push the QoS in the target network. In Figure 12B, the UE may have set up a connection to the PDN and established a QoS flow through the source-RAN and the source-HSGW/S-GW. The QoS is also set up for the bearer over a PDN connection 1280 with an APN. The UE then transitions from the source-RAN to the target-RAN 1240 and selects a target-HSGW/S-GW. This may be an active handoff or a dormant handoff. The AMSS 308 may then notify the application of a "QoS-suspend" event if the application has setup a notification callback as described above.

The UE then attaches to the target network at block 1242. If the target network is configured for eHRPD, the UE may create a PPP session and perform EAP-AKA authentication. If the target network is configured for E-UTRA, the UE may perform an E-UTRA attach procedure. In some implementations the AMSS 308 may transmit a radio access technology (RAT) change notification signal 1244 to the application. The UE performs IP context transfer via the handover attach procedure 1246 for each PDN connection that it has attachments to within the source RAN. Once the transition is complete and upon learning that the target network is both UE-initiated and network-initiated QoS capable, the AMSS 308 may start a timer (wait-for-network-to-push-QoS-timer) 1248. In this case, the timer may expire while the QoS has not successfully been pushed by the network. If the application has a handle to access the QoS flow, the AMSS 308 may perform the UE-initiated QoS procedures for the application 1250 as indicated in blocks 1012 and 1014 of Figure 10. If the application does not have a handle to the QoS flow, the AMSS 308 may release the QoS profile. If a notification callback with the AMSS 308 is registered, the AMSS 308 may notify the application and of a "QoS-release" event. In this situation, the QoS flow may either be successfully activated and ready to exchange packets as either the network-initiated or UE-initiated procedures were successful, or the QoS flow could be released by the application.

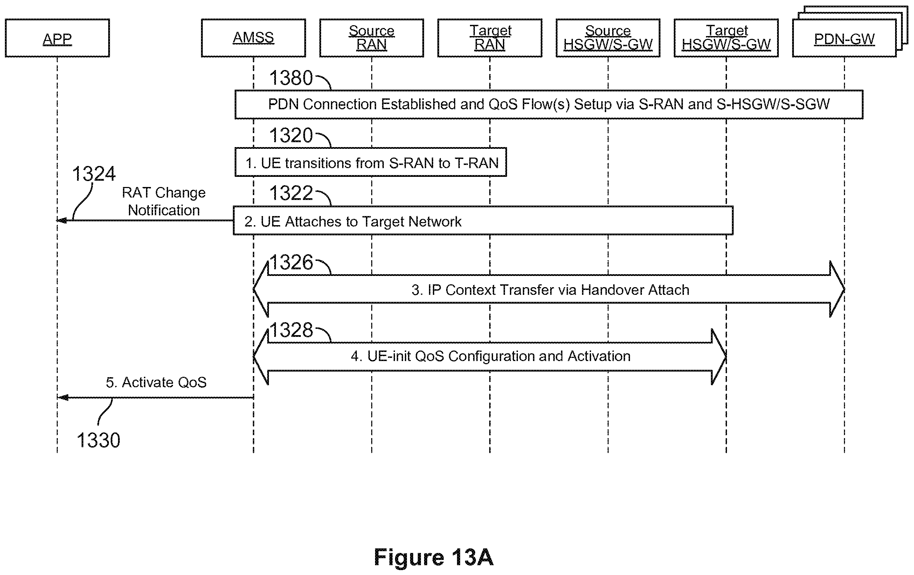

Figure 13A shows an exemplary signal flow diagram illustrating signal flow exchanged for a UE with an established QoS flow in one the two following scenarios. In one scenario, the UE transitions to a UE-initiated only QoS capable network, where the original QoS flow was initiated by either the UE or the network in the original network. In this scenario, the application has the handle to access the QoS flow if the QoS was initiated by the network in the original network. In the other scenario, the UE transitions to a UE-initiated and a network-initiated QoS capable network, but the network does not successfully push the QoS within some configurable period of time. The original QoS flow may have been initiated either by the UE or the network in the original network. In this scenario, the application also has a handle to access the QoS flow if the QoS was initiated by the network in the original network.

In Figure 13A, the UE may have established the PDN connection to the APN via the source-RAN and the source HSGW/S-GW, and the QoS is configured for a bearer over the PDN connection 1380 with the APN. The UE then transitions from the source-RAN to the target-RAN 1320 and selects a target-HSGW/S-GW. This may be an active handoff or a dormant handoff. The AMSS 308 may then notify the application of a "QoS-suspend" event if the application has setup a notification callback as described above.

The UE then attaches to the target network at block 1322. If the target network is configured for eHRPD, the UE may create a PPP session and perform EAP-AKA authentication. If the target network is configured for E-UTRA, the UE may perform an E-UTRA attach procedure. In some implementations the AMSS 308 may transmit a radio access technology (RAT) change notification signal 1324 to the application. The UE performs IP context transfer via the handover attach procedure 1326 for each PDN connection that it has attachments to within the source RAN. Once the transition is complete and upon learning that the target network is only capable of UE-initiated QoS, the AMSS 308 may initiate the UE-initiated QoS procedures 1328. In this case, the application specifies two sets of QoS parameters when initially requesting QoS in the original network. After the QoS flows are activated successfully, the AMSS 308 notifies the application of successful QoS activation by notifying the application of a "QoS-activate" event 1330. In some implementations, the notification may include a "QoS-suspend" if explicit QoS activation is needed. The AMSS 308 may also be configured to transmit QoS flow parameters to the application, as described above. The new QoS flow is now activated and is ready to be used to exchange packets for the application in the target network. If the application specified just one set of QoS parameters when initially requesting QoS in the original network, then after the IP context transfer 1326, the AMSS 308 may not be able to initiate the UE-initiated QoS procedure. In this case, the AMSS 308 may release the QoS context and notify the application of a "QoS-release" event.

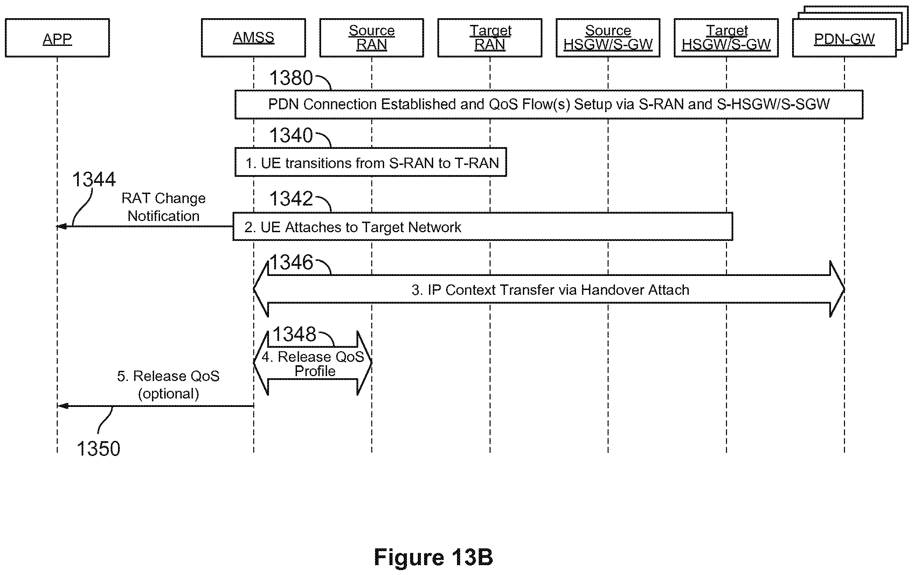

Figure 13B shows an exemplary signal flow diagram illustrating signal flow exchanged when a UE with an established QoS flow transitions to a network capable of only UE-initiated QoS or a network capable of both UE-initiated and network initiated QoS and the QoS was initiated by the network in the original network. In this scenario, the network may not successfully push the QoS within some configurable period of time if the target network is capable of both UE-initiated and network-initiated QoS. In this scenario, the application may not have a handle to access the QoS flow but may have registered a notification callback with the AMSS.

In Figure 13B, the UE may have established the PDN connection to the APN via the source-RAN and the source HSGW/S-GW, and the QoS is configured for a bearer over the PDN connection 1380 with the APN. The UE then transitions from the source-RAN to the target-RAN 1340 and selects a target-HSGW/S-GW. This may be an active handoff or a dormant handoff. The AMSS 308 may then notify the application of a "QoS-suspend" event if the application has setup a notification callback as described above.

The UE then attaches to the target network at block 1342. If the target network is configured for eHRPD, the UE may create a PPP session and perform EAP-AKA authentication. If the target network is configured for E-UTRA, the UE may perform an E-UTRA attach procedure. In some implementations the AMSS 308 may transmit a radio access technology (RAT) change notification signal 1344 to the application. The UE performs IP context transfer via the handover attach procedure 1346 for each PDN connection that it has attachments to within the source RAN. Once the transition is complete and upon learning that the target network is only capable of UE-initiated QoS, as the application does not have a handle to the QoS flow, the AMSS 308 may release the QoS profile by locally deleting the packet filters and explicitly releasing the radio QoS 1348 and notify the application of a "QoS-release" event 1350.

Figure 13B may also be used to show another exemplary signal flow diagram illustrating signal flow exchanged when a UE with an established QoS flow moves to a network capable of only UE-initiated QoS or a network capable of both UE-initiated and network initiated QoS and the QoS was initiated by the network in the original network. In this scenario, the network may not successfully push the QoS within some configurable period of time if the target network is capable of both UE-initiated and network-initiated QoS. In this scenario, as opposed to the scenario described above, the application may not have a handle to access the QoS flow but has not registered a notification callback with the AMSS.

In this case, the UE may have established the PDN connection to the APN via the source-RAN and the source HSGW/S-GW, and the QoS is configured for a bearer over the PDN connection 1380 with the APN. The UE then transitions from the source-RAN to the target-RAN 1340 and selects a target-HSGW/S-GW. This may be an active handoff or a dormant handoff. As the application has not registered a notification callback, the AMSS 308 may not notify the application regarding the transition. If the target network is configured for eHRPD, the UE may create a PPP session and perform EAP-AKA authentication. If the target network is configured for E-UTRA, the UE may perform an E-UTRA attach procedure. The UE performs IP context transfer via the handover attach procedure 1346 for each PDN connection that it has attachments to within the source RAN. Once the transition is complete and upon learning that the target network is only capable of UE-initiated QoS, as the application does not have a handle to the QoS flow, the AMSS 308 may release the QoS profile by locally deleting the packet filters and explicitly releasing the radio QoS 1350. Since the notification callback is not registered with the AMSS, the AMSS 308 may not notify the application that the QoS profile has been released.

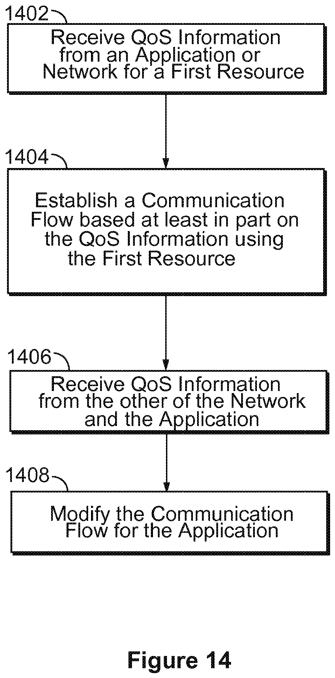

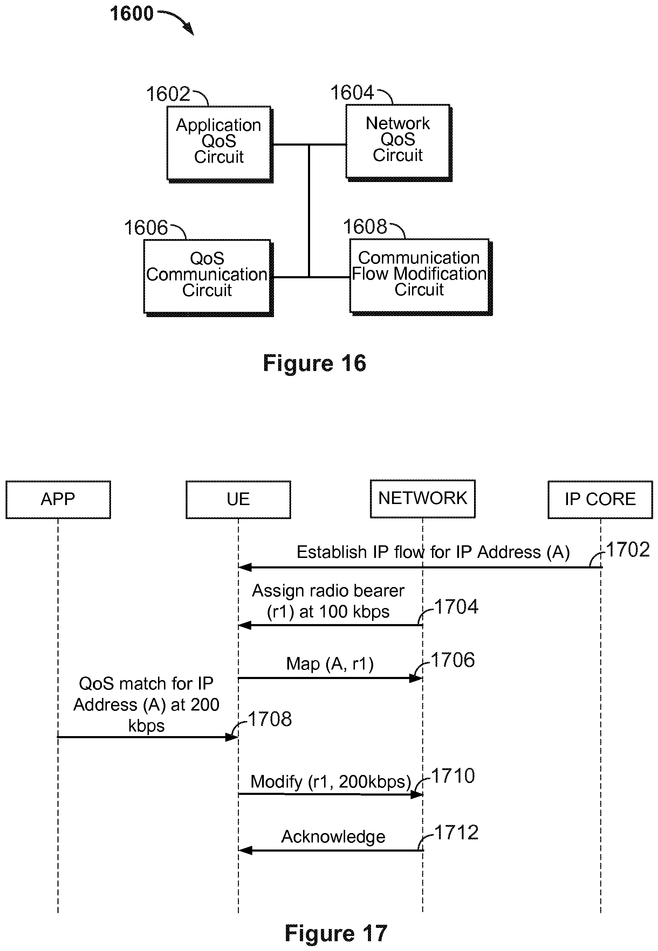

Figure 14 shows process flow diagram of an example method for establishing a QoS flow in a multimode communication network. The QoS flow process may be implemented on a UE according to various aspects described above. At block 1402, a UE receives QoS information from one of an application or a network for a first resource. As described above, this information may correspond to an application requesting a QoS flow based on certain requested parameters. At block 1404, the UE establishes a communication flow based at least in part on the received quality of service information using the first resource. At block 1406, the UE receives quality of service information from the other of the application and the network for the first resource. For example, the UE may have received QoS information from the application and established a flow based in part on this information. At a later time, the network provides additional QoS information. As described above, this information may correspond to information about the current QoS capabilities of the local network in which the UE is currently operating and may include information as to whether network-initiated or UE-initiated QoS (or both) capabilities exist. At block 1408, the UE may alter the communication flow based on the information received from the other of the application and the network. For example, if the first QoS information received is for a 100 kbps communication flow from the network, when the application is configured to request 200 kbps for the communication flow, the UE may cause the communication flow to be modified to the higher bandwidth. An example of the signaling for this process is shown and described below in reference to Figure 17.

If implemented in software, the functions may be stored on or transmitted over as one or more instructions or code on a computer-readable medium. The steps of a method or algorithm disclosed herein may be implemented in a processor-executable software module which may reside on a computer-readable medium. Computer-readable media includes both computer storage media and communication media including any medium that can be enabled to transfer a computer program from one place to another. A storage media may be any available media that may be accessed by a computer. By way of example, and not limitation, such computer-readable media may include RAM, ROM, EEPROM, CD-ROM or other optical disk storage, magnetic disk storage or other magnetic storage devices, or any other medium that may be used to store desired program code in the form of instructions or data structures and that may be accessed by a computer. Also, any connection can be properly termed a computer-readable medium. Disk and disc, as used herein, includes compact disc (CD), laser disc, optical disc, digital versatile disc (DVD), floppy disk, and blu-ray disc where disks usually reproduce data magnetically, while discs reproduce data optically with lasers. Combinations of the above should also be included within the scope of computer-readable media. Additionally, the operations of a method or algorithm may reside as one or any combination or set of codes and instructions on a machine readable medium and computer-readable medium, which may be incorporated into a computer program product.

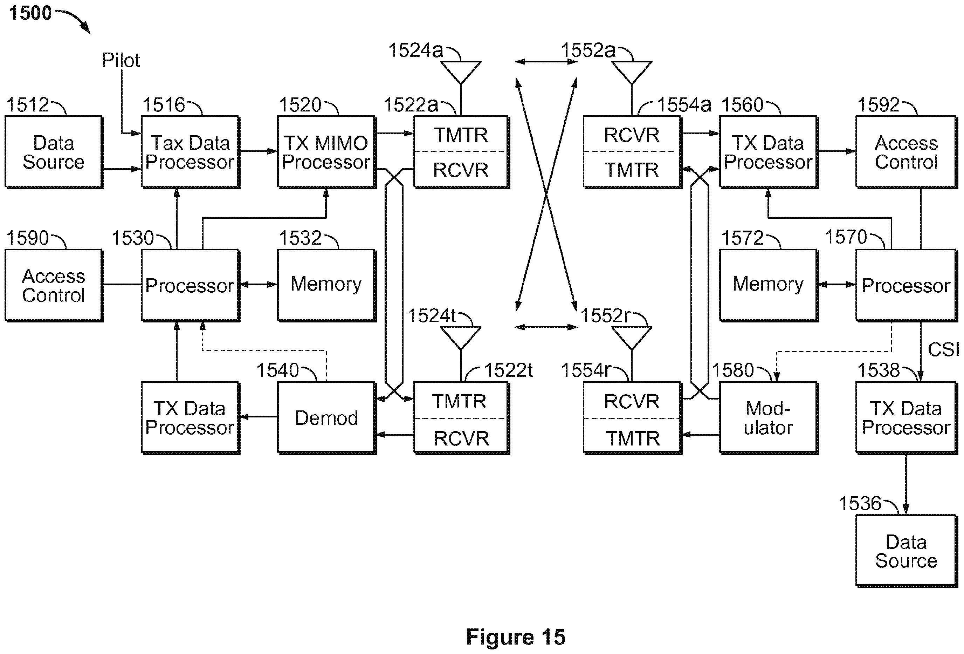

Furthermore, as indicated by the systems and methods described above, the teachings herein may be incorporated into a node (e.g., a device) employing various components for communicating with at least one other node. Figure 15 depicts several sample components that may be employed to facilitate communication between nodes. Specifically, Figure 15 is a simplified block diagram of a first wireless device 1510 (e.g., an access point) and a second wireless device 1550 (e.g., an access terminal) of a multiple-in-multiple-out (MIMO) system 1500. At the first device 1510, traffic data for a number of data streams is provided from a data source 1512 to a transmit (TX) data processor 1514.

In some aspects, each data stream is transmitted over a respective transmit antenna. The TX data processor 1514 formats, codes, and interleaves the traffic data for each data stream based on a particular coding scheme selected for that data stream to provide coded data.

The coded data for each data stream may be multiplexed with pilot data using OFDM techniques. The pilot data is typically a known data pattern that is processed in a known manner and may be used at the receiver system to estimate the channel response. The multiplexed pilot and coded data for each data stream is then modulated (i.e., symbol mapped) based on a particular modulation scheme (e.g., BPSK, QSPK, M-PSK, or M-QAM) selected for that data stream to provide modulation symbols. The data rate, coding, and modulation for each data stream may be determined by instructions performed by a processor 1530. A data memory 1532 may store program code, data, and other information used by the processor 1530 or other components of the device 1510.

The modulation symbols for the data streams are then provided to a TX MIMO processor 1520, which may further process the modulation symbols (e.g., for OFDM). The TX MIMO processor 1520 then provides N_{T} modulation symbol streams to N_{T} transceivers (XCVR) 1522A through 1522T. In some aspects, the TX MIMO processor 1520 applies beam-forming weights to the symbols of the data streams and to the antenna from which the symbol is being transmitted.

Each transceiver 1522 receives and processes a respective symbol stream to provide one or more analog signals, and further conditions (e.g., amplifies, filters, and up converts) the analog signals to provide a modulated signal suitable for transmission over the MIMO channel. N_{T} modulated signals from transceivers 1522A through 1522T are then transmitted from N_{T} antennas 1524A through 1524T, respectively.

At the second device 1550, the transmitted modulated signals are received by N_{R} antennas 1552A through 1552R and the received signal from each antenna 1552 is provided to a respective transceiver (XCVR) 1554A through 1554R. Each transceiver 1554 conditions (e.g., filters, amplifies, and down converts) a respective received signal, digitizes the conditioned signal to provide samples, and further processes the samples to provide a corresponding "received" symbol stream.

A receive (RX) data processor 1560 then receives and processes the N_{R} received symbol streams from N_{R} transceivers 1554 based on a particular receiver processing technique to provide N_{T} "detected" symbol streams. The RX data processor 1560 then demodulates, deinterleaves, and decodes each detected symbol stream to recover the traffic data for the data stream. The processing by the RX data processor 1560 is complementary to that performed by the TX MIMO processor 1520 and the TX data processor 1514 at the device 1510.

A processor 1570 periodically determines which pre-coding matrix to use (discussed below). The processor 1570 formulates a reverse link message comprising a matrix index portion and a rank value portion. A data memory 1572 may store program code, data, and other information used by the processor 1570 or other components of the second device 1550.

The reverse link message may comprise various types of information regarding the communication link and/or the received data stream. The reverse link message is then processed by a TX data processor 1538, which also receives traffic data for a number of data streams from a data source 1536, modulated by a modulator 1580, conditioned by the transceivers 1554A through 1554R, and transmitted back to the device 1510.

At the device 1510, the modulated signals from the second device 1550 are received by the antennas 1524, conditioned by the transceivers 1522, demodulated by a demodulator (DEMOD) 1540, and processed by a RX data processor 1542 to extract the reverse link message transmitted by the second device 1550. The processor 1530 then determines which pre-coding matrix to use for determining the beam-forming weights then processes the extracted message.

Figure 15 also illustrates that the communication components may include one or more components that perform access control operations as taught herein. For example, an access control component 1590 may cooperate with the processor 1530 and/or other components of the device 1510 to send/receive signals to/from another device (e.g., device 1550) as taught herein. Similarly, an access control component 1592 may cooperate with the processor 1570 and/or other components of the device 1550 to send/receive signals to/from another device (e.g., device 1510). It should be appreciated that for each device 1510 and 1550 the functionality of two or more of the described components may be provided by a single component. For example, a single processing component may provide the functionality of the access control component 1590 and the processor 1530 and a single processing component may provide the functionality of the access control component 1592 and the processor 1570. Furthermore, the components of the apparatus 1500 described with reference to Figure 3 may be incorporated with/into the components of Figure 15.

Figure 16 illustrates a functional block diagram of a wireless communication apparatus. Those skilled in the art will appreciate that a wireless communication device may have more components than the simplified wireless communication device 1600 shown in FIG. 16. The wireless communication device 1600 shown includes only those components useful for describing some prominent features of certain implementations, such as those described above. The wireless communication device 1600 includes an application quality of service (QoS) circuit 1602, a network quality of service (QoS) circuit 1604, a quality of service (QoS) communication circuit 1606, and a communication flow modification circuit 1608.

In some implementations, the application QoS circuit 1602 is configured to receive QoS information from an application for a first resource. The application QoS circuit 1602 may include one or more of a digital signal processor, a memory, and an application interface. In some implementations, the means for receiving quality of service information from one of an application or a network for a first resource and/or the means for receiving quality of service information from the other of the application or the network for the first resource may include the application QoS circuit 1602.

In some implementations, the network QoS circuit 1604 is configured to receive QoS information from a network for a first resource. The network QoS circuit 1604 may include one or more of a digital signal processor, a memory, a receiver, an antenna, and a network interface. In some implementations, the means for receiving quality of service information from one of an application or a network for a first resource and/or the means for receiving quality of service information from the other of the application or the network for the first resource may include the network QoS circuit 1604.

Some implementations include a QoS communication circuit 1606 configured to establish a communication flow based at least in part on received quality of service information using a first resource. The QoS communication circuit 1606 may include one or more of a transmitter, an antenna, and a processor. In some implementations, the means for establishing a communication flow may include the QoS communication circuit 1606.

The communication flow modification circuit 1608, in some implementations, may be configured to modify an established communication flow for the application based on the information received from the other of the application or the network. The communication flow modification circuit 1608 may include one or more of a processor, a memory, a transceiver, and an antenna. In some implementations, the means for modifying the communication flow for the application may include the communication flow modification circuit 1608.

Figure 17 shows a signaling diagram for illustrating modification signals that may be exchanged between elements of a communication system. In the implementation shown, the UE may have previously requested access to IP address A. The UE receives a signal from the IP core, via the network, for a communication flow for IP address A 1707. The network assigns a first radio bearer of 100 kbps for the flow 1704. The UE receives this information and maps the bearer to the address. In some implementations, this information may also be transmitted to one or more applications executing on the UE.

The application on the UE may identify a match for the communication flow. For example, the application may match on all or a portion of the IP address A. The application may identify a different set of quality of service parameters for the communication flow. For example, the application may be configured to communicate with IP address A using 200 kbps. While bandwidth is used in this example, it will be understood that other quality of service parameters may be associated with a communication flow and modified using the techniques described herein.

In the case where a match is found, the application may transmit a signal 1708 providing this information to the UE. The UE, in turn, may transmit a signal 1710 requesting a modification of the communication flow, whereby the radio bearer is retained, but the kbps are adjusted. In the implementation shown in Figure 17, the network can accommodate the requested modification and transmits an acknowledgement signal 1712 to the UE accordingly. In some implementations, the network may be unable to accommodate the requested modification, in which case the network may transmit a failure message.

It should be understood that any reference to an element herein using a designation such as "first," "second," and so forth does not generally limit the quantity or order of those elements. Rather, these designations may be used herein as a convenient method of distinguishing between two or more elements or instances of an element. Thus, a reference to first and second elements does not mean that only two elements may be employed there or that the first element must precede the second element in some manner. Also, unless stated otherwise a set of elements may include one or more elements.

A person/one having ordinary skill in the art would understand that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

A person/one having ordinary skill in the art would further appreciate that any of the various illustrative logical blocks, modules, processors, means, circuits, and algorithm steps described in connection with the aspects disclosed herein may be implemented as electronic hardware (e.g., a digital implementation, an analog implementation, or a combination of the two, which may be designed using source coding or some other technique), various forms of program or design code incorporating instructions (which may be referred to herein, for convenience, as "software" or a "software module"), or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present disclosure.

The various illustrative logical blocks, modules, and circuits described in connection with the aspects disclosed herein and in connection with Figures 1-14 may be implemented within or performed by an integrated circuit (IC), an access terminal, or an access point. The IC may include a general purpose processor, a digital signal processor (DSP), an application specific integrated circuit (ASIC), a field programmable gate array (FPGA) or other programmable logic device, discrete gate or transistor logic, discrete hardware components, electrical components, optical components, mechanical components, or any combination thereof designed to perform the functions described herein, and may execute codes or instructions that reside within the IC, outside of the IC, or both. The logical blocks, modules, and circuits may include antennas and/or transceivers to communicate with various components within the network or within the device. A general purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration. The functionality of the modules may be implemented in some other manner as taught herein. The functionality described herein (e.g., with regard to one or more of the accompanying figures) may correspond in some aspects to similarly designated "means for" functionality in the appended claims.

It is understood that any specific order or hierarchy of steps in any disclosed process is an example of a sample approach. Based upon design preferences, it is understood that the specific order or hierarchy of steps in the processes may be rearranged while remaining within the scope of the present disclosure. The accompanying method claims present elements of the various steps in a sample order, and are not meant to be limited to the specific order or hierarchy presented.

Various modifications to the implementations described in this disclosure may be readily apparent to those skilled in the art, and the generic principles defined herein may be applied to other implementations without departing from the spirit or scope of this disclosure. Thus, the disclosure is not intended to be limited to the implementations shown herein, but is to be accorded the widest scope consistent with the claims, the principles and the novel features disclosed herein. The word "exemplary" is used exclusively herein to mean "serving as an example, instance, or illustration." Any implementation described herein as "exemplary" is not necessarily to be construed as preferred or advantageous over other implementations.

Certain features that are described in this specification in the context of separate implementations also can be implemented in combination in a single implementation. Conversely, various features that are described in the context of a single implementation also can be implemented in multiple implementations separately or in any suitable sub-combination. Moreover, although features may be described above as acting in certain combinations and even initially claimed as such, one or more features from a claimed combination can in some cases be excised from the combination, and the claimed combination may be directed to a sub-combination or variation of a sub-combination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the implementations described above should not be understood as requiring such separation in all implementations, and it should be understood that the described program components and systems can generally be integrated together in a single software product or packaged into multiple software products. Additionally, other implementations are within the scope of the following claims. In some cases, the actions recited in the claims can be performed in a different order and still achieve desirable results.

## Claims

1. A wireless communication system comprising:
a user equipment (106a - 1061, 206a, 206b) comprising a quality of service manager (310) configured to, in the given order:
receive quality of service information from an application (304) for a first resource;
establish a communication flow between the application (304) and an application or server (228) associated with an IP network (226) over a radio access network, RAN, and a core network based at least in part on the received quality of service information using the first resource;
receive quality of service information from the RAN for the first resource;
determine whether a RAN-granted profile of the established communication flow is the most preferred in a profile set requested by the user equipment (106a - 1061, 206a, 206b) and the requested profile set is a subset of a profile set authorized by a high rate packet data servicing gateway (214) included in the core network and which connects the core network to the RAN; and
if the above condition is not satisfied, request the RAN to modify the end-to-end quality of service of the communication flow for the application (304) between the application (304) and the application or server (228) associated with the IP network (226) based on the information received from the RAN.

2. The wireless communication system of Claim 1, wherein the quality of service manager (310) is configured to further request the RAN to modify the communication flow based on a comparison between the quality of service information received from the application (304) and the quality of service information received from the RAN.

3. The wireless communication system of Claim 1, wherein establishing a communication flow over a RAN and a core network comprises establishing, for an application (304), a first communication flow in accordance with the quality of service information over a first RAN, and the quality of service manager (310) is further configured to switch to a second RAN for the first communication flow transparently to the application (304),
in particular wherein
i) the first RAN utilizes a first radio access technology and the second RAN utilizes a second radio access technology, or
ii) the first RAN is associated with a first network operator and the second RAN is associated with a second network operator.

4. The wireless communication system of Claim 1,
wherein the quality of service information from the application (304) comprises information about a requested quality of service flow, and
wherein the quality of service manager (310) is further configured to determine whether the information about the requested quality of service flow matches information about an existing quality of service flow initiated by the RAN,
in particular wherein
i) the information about the requested quality of service flow comprises a packet filter and a set of quality of service parameters, or
ii) the quality of service manager (310) is further configured to determine whether to modify the existing quality of service flow based on the information about the requested quality of service flow and the existing quality of service flow.

5. The wireless communication system of Claim 1, wherein the quality of service information from the application (304) comprises a request for a quality of service flow,
wherein the quality of service information from the RAN comprises information indicating whether a quality of service flow initiated by the RAN has been established, and
wherein the quality of service manager (310) is configured to wait to receive the quality of service information indicating whether the quality of service flow initiated by the RAN has been established for a configurable amount of time.

6. The wireless communication system of Claim 1, wherein the quality of service manager (310) is further configured to notify the application (304) of quality of service information based on the received quality of service information from the RAN,
in particular wherein the quality of service manager (310) is further configured to receive a query from the application (304) for quality of service information.

7. The wireless communication system of Claim 1, wherein when the user equipment (106a - 106l, 206a, 206b) transitions from a source RAN to a target RAN, the quality of service manager (310) is further configured to determine quality of service capabilities of the target RAN,
in particular wherein
i) the quality of service manager (310) determines that the target RAN is not capable of using quality of service procedures initiated by the RAN, and wherein the quality of service manager (310) is further configured to establish the quality of service communication flow for the application (304) using quality of service procedures initiated by the user equipment (106a - 106l, 206a, 206b), or
ii) the quality of service manager (310) is further configured to notify the application (304) about quality of service events, or
iii) the quality of service manager (310) determines that the target RAN is capable of using quality of service initiated by the RAN,
wherein the quality of service information from the RAN comprises information indicating whether a quality of service flow initiated by the RAN has been established, and
wherein the quality of service manager (310) is further configured to wait to receive the information indicating whether the quality of service flow initiated by the RAN has been established for a configurable amount of time.

8. A method implemented in a wireless communications system and by a user equipment (106a - 106l, 206a, 206b), the method comprising, in the given order:
receiving quality of service information from an application (304) for a first resource;
establishing a communication flow between the application (304) and an application or server (228) associated with an IP network (226) over a RAN and a core network based at least in part on the received quality of service information using the first resource;
receiving quality of service information from the RAN for the first resource;
determining whether a RAN-granted profile of the established communication flow is the most preferred in a profile set requested by the user equipment (106a - 106l, 206a, 206b) and the requested profile set is a subset of a profile set authorized by a high rate packet data servicing gateway included in the core network and which connects the core network to the RAN; and
if the above condition is not satisfied, requesting the RAN to modify the end-to-end quality of service of the communication flow for the application (304) between the application (304) and the application or server (228) associated with the IP network (226) based the information received from the RAN.

9. The method of Claim 8 further comprising modifying the communication flow based on a comparison between the quality of service information received from the application (304) and the quality of service information received from the RAN.

10. The method of Claim 8, wherein establishing a communication flow over a RAN and a core network comprises establishing, for an application (304), a first communication flow in accordance with the quality of service information over a first RAN, and the quality of service manager (310) is further configured to switch to a second RAN for the first communication flow transparently to the application (304).

11. The method of Claim 8,
wherein the quality of service information from the application (304) comprises information about a requested quality of service flow, and
wherein the method further comprises determining whether the information about the requested quality of service flow matches information about an existing quality of service flow initiated by the RAN,
in particular wherein
i) the information about the requested quality of service flow comprises a packet filter and a set of quality of service parameters, or
ii) the method further comprises determining whether to modify the existing quality of service flow based on the information about the requested quality of service flow and the existing quality of service flow.

12. The method of Claim 8, wherein the quality of service information from the application (304) comprises a request for a quality of service flow,
wherein the quality of service information from the RAN comprises information indicating whether a quality of service flow initiated by the RAN has been established, and
wherein the method further comprises waiting to receive the quality of service information indicating whether the quality of service flow initiated by the RAN has been established for a configurable amount of time.

13. The method of Claim 8, wherein the method further comprises notifying the application (304) of quality of service information based on the received quality of service information from the RAN,
in particular wherein the method further comprises receiving a query from the application (304) for quality of service information.

14. The method of Claim 8, wherein the method further comprises determining quality of service capabilities of a target RAN, when a user equipment (106a - 106l, 206a, 206b) transitions from a source RAN to the target RAN,
in particular wherein
i) the determining the quality of service capabilities of the target RAN comprises determining that the target RAN is not capable of using quality of service procedures initiated by the RAN, and wherein the method further comprises establishing the quality of service communication flow for the application (304) using quality of service procedures initiated by the user equipment (106a - 106l, 206a, 206b), or
ii) the method further comprises notifying the application (304) about quality of service events, or
iii) the determining the quality of service capabilities of the target RAN comprises determining that the target RAN is capable of using quality of service initiated by the RAN,
wherein the quality of service information from the RAN information indicating whether a quality of service flow initiated by the RAN has been established, and wherein the method further comprises waiting to receive the information indicating whether the quality of service flow initiated by the RAN has been established for a configurable amount of time.

15. A computer program comprising instructions which, when executed on a computer, cause the computer to execute all steps of the method according to any of the claims 8 to 14.

## Patentansprüche

1. Drahtloses Kommunikationssystem, aufweisend:
ein Benutzergerät (106a - 106l, 206a, 206b) mit einem Dienstqualitätsmanager (310), der in der angegebenen Reihenfolge konfiguriert ist:
Empfangen von Dienstqualitätsinformation von einer Anwendung (304) für eine erste Ressource;
Einrichten eines Kommunikationsflusses zwischen der Anwendung (304) und einer Anwendung oder einem Server (228), die einem IP-Netzwerk (226) zugeordnet sind, über ein Funkzugangsnetzwerk, RAN, und einem Kernnetzwerk zumindest teilweise basierend auf der empfangenen Dienstqualitätsinformation durch Verwenden der ersten Ressource;
Empfangen von Dienstqualitätsinformation von dem RAN für die erste Ressource;
Bestimmen, ob ein RAN-gewährtes Profil des eingerichteten Kommunikationsflusses in einem Profilsatz, der von dem Benutzergerät (106a - 106l, 206a, 206b) angefordert wird, am meisten bevorzugt ist und der angeforderte Profilsatz eine Teilmenge eines Profilsatzes ist, der durch ein Paketdaten-Wartungs-Gateway mit hoher Rate (214) genehmigt ist, das in dem Kernnetzwerk enthalten ist und das das Kernnetzwerk mit dem RAN verbindet; und
wenn die obige Bedingung nicht erfüllt ist, auffordern des RAN die Ende-zu-Ende-Dienstqualität des Kommunikationsflusses für die Anwendung (304) zwischen der Anwendung (304) und der Anwendung oder dem Server (228), die dem IP-Netzwerk (226) zugeordnet sind, zu modifizieren, basierend auf der Information, die von dem RAN empfangen wird.

2. Drahtloses Kommunikationssystem nach Anspruch 1, wobei der Dienstqualitätsmanager (310) so konfiguriert ist, das RAN weiter aufzufordern, den Kommunikationsfluss zu modifizieren, basierend auf einem Vergleich zwischen der von der Anwendung (304) empfangenen Dienstqualitätsinformation und der Dienstqualitätsinformation, die vom RAN empfangen wird.

3. Drahtloses Kommunikationssystem nach Anspruch 1, wobei Einrichten eines Kommunikationsflusses über ein RAN und ein Kernnetzwerk Einrichten eines ersten Kommunikationsflusses für eine Anwendung (304) gemäß der Dienstqualitätsinformation über ein erstes RAN aufweist, und der Dienstqualitätsmanager (310) ferner konfiguriert ist zu einem zweiten RAN für den ersten Kommunikationsfluss umzuschalten transparent zu der Anwendung (304),
insbesondere wobei
i) das erste RAN eine erste Funkzugangstechnologie verwendet und das zweite RAN eine zweite Funkzugangstechnologie verwendet, oder
ii) das erste RAN einem ersten Netzwerkbetreiber zugeordnet ist und das zweite RAN einem zweiten Netzwerkbetreiber zugeordnet ist.

4. Drahtloses Kommunikationssystem nach Anspruch 1,
wobei die Dienstqualitätsinformation von der Anwendung (304) Informationen über einen angeforderten Dienstqualitätsfluss aufweist, und
wobei der Dienstqualitätsmanager (310) ferner konfiguriert ist, um zu bestimmen, ob die Information über den angeforderten Dienstqualitätsfluss mit Information über einen bestehenden Dienstqualitätsfluss übereinstimmt, der durch das RAN initiiert wurde,
insbesondere wobei
i) die Information über den angeforderten Dienstqualitätsfluss ein Paketfilter und einen Satz von Dienstqualitätsparametern aufweist, oder
ii) der Dienstqualitätsmanager (310) weiter konfiguriert ist, um zu bestimmen, ob der bestehende Dienstqualitätsfluss modifiziert werden soll, basierend auf der Information über den angeforderten Dienstqualitätsfluss und den bestehenden Dienstqualitätsfluss.

5. Drahtloses Kommunikationssystem nach Anspruch 1, wobei die Dienstqualitätsinformation von der Anwendung (304) eine Anfrage für einen Dienstqualitätsfluss aufweist,
wobei die Dienstqualitätsinformation von dem RAN Information aufweist, die anzeigt, ob ein Dienstqualitätsfluss, der durch das RAN initiiert wurde, eingerichtet wurde, und
wobei der Dienstqualitätsmanager (310) so konfiguriert ist, dass er darauf wartet, die Dienstqualitätsinformation zu empfangen, die anzeigt, ob der Dienstqualitätsfluss, der durch das RAN initiiert wurde, für eine konfigurierbare Zeitdauer eingerichtet wurde.

6. Drahtloses Kommunikationssystem nach Anspruch 1, wobei der Dienstqualitätsmanager (310) weiter konfiguriert ist, um der Anwendung (304) Dienstqualitätsinformation basierend auf der empfangenen Dienstqualitätsinformation von dem RAN mitzuteilen,
insbesondere wobei der Dienstqualitätsmanager (310) weiter konfiguriert ist eine Anfrage von der Anwendung (304) nach Dienstqualitätsinformation zu empfangen.

7. Drahtloses Kommunikationssystem nach Anspruch 1, wobei, wenn das Benutzergerät (106a - 106l, 206a, 206b) von einem Quellen-RAN zu einem Ziel-RAN übergeht, der Dienstqualitätsmanager (310) weiter konfiguriert ist, um die Dienstqualitätsfähigkeiten des Ziel-RAN zu bestimmen,
insbesondere wobei
i) der Dienstqualitätsmanager (310) bestimmt, dass das Ziel-RAN nicht in der Lage ist, von dem RAN initiierte Dienstqualitätsprozeduren zu verwenden, und wobei der Dienstqualitätsmanager (310) weiter konfiguriert ist, den Dienstqualitäts-Kommunikationsfluss für die Anwendung (304) einzurichten durch Verwenden von Dienstqualitätsprozeduren, die durch das Benutzergerät (106a - 106l, 206a, 206b) initiiert wurden, oder
ii) der Dienstqualitätsmanager (310) weiter konfiguriert ist, die Anwendung (304) über Dienstqualitätsereignisse zu benachrichtigen, oder
iii) der Dienstqualitätsmanager (310) bestimmt, dass das Ziel-RAN in der Lage ist, die durch das RAN initiierte Dienstqualität zu verwenden,
wobei die Dienstqualitätsinformation von dem RAN Information aufweist, die anzeigt, ob ein Dienstqualitätsfluss, die durch das RAN initiiert wurde, eingerichtet wurde, und
wobei der Dienstqualitätsmanager (310) weiter konfiguriert ist, dass er darauf wartet, die Information zu empfangen, die anzeigt, ob der Dienstqualitätsfluss, der durch das RAN initiiert wurde, für eine konfigurierbare Zeitdauer eingerichtet wurde.

8. Verfahren, das in einem drahtlosen Kommunikationssystem und durch ein Benutzergerät (106a - 106l, 206a, 206b) implementiert ist, wobei das Verfahren in der angegebenen Reihenfolge aufweist:
Empfangen von Dienstqualitätsinformation von einer Anwendung (304) für eine erste Ressource;
Einrichten eines Kommunikationsflusses zwischen der Anwendung (304) und einer Anwendung oder einem Server (228), die einem IP-Netzwerk (226) zugeordnet sind, über ein RAN und einem Kernnetzwerk zumindest teilweise basierend auf der empfangenen Dienstqualitätsinformation durch Verwenden der ersten Ressource;
Empfangen von Dienstqualitätsinformation von dem RAN für die erste Ressource;
Bestimmen, ob ein RAN-gewährtes Profil des eingerichteten Kommunikationsflusses in einem Profilsatz, der von dem Benutzergerät (106a - 106l, 206a, 206b) angefordert wird, am meisten bevorzugt ist und der angeforderte Profilsatz eine Teilmenge eines Profilsatzes ist, der durch ein Paketdaten-Wartungs-Gateway mit hoher Rate (214) genehmigt ist, das in dem Kernnetzwerk enthalten ist und das das Kernnetzwerk mit dem RAN verbindet; und
wenn die obige Bedingung nicht erfüllt ist, auffordern des RAN die Ende-zu-Ende-Dienstqualität des Kommunikationsflusses für die Anwendung (304) zwischen der Anwendung (304) und der Anwendung oder dem Server (228), die dem IP-Netzwerk (226) zugeordnet sind, zu modifizieren, basierend auf der Information, die von dem RAN empfangen wird.

9. Verfahren nach Anspruch 8, weiter aufweisend Modifizieren des Kommunikationsflusses basierend auf einem Vergleich zwischen der von der Anwendung (304) empfangenen Dienstqualitätsinformation und der von dem RAN empfangenen Dienstqualitätsinformation.

10. Verfahren nach Anspruch 8, wobei Einrichten eines Kommunikationsflusses über ein RAN und ein Kernnetzwerk Einrichten eines ersten Kommunikationsflusses für eine Anwendung (304) gemäß der Dienstqualitätsinformation über ein erstes RAN aufweist, und der Dienstqualitätsmanager (310) weiter konfiguriert ist zu einem zweiten RAN für den ersten Kommunikationsfluss umzuschalten transparent zu der Anwendung (304).

11. Verfahren nach Anspruch 8,
wobei die Dienstqualitätsinformation von der Anwendung (304) Informationen über einen angeforderten Dienstqualitätsfluss aufweist, und
wobei das Verfahren weiter aufweist, bestimmen, ob die Information über den angeforderten Dienstqualitätsfluss mit Information über einen bestehenden Dienstqualitätsfluss übereinstimmt, der durch das RAN initiiert wurde,
insbesondere wobei
i) die Information über den angeforderten Dienstqualitätsfluss ein Paketfilter und einen Satz von Dienstqualitätsparametern aufweist, oder
ii) das Verfahren weiter aufweist, bestimmen, ob der bestehende Dienstqualitätsfluss modifiziert werden soll, basierend auf der Information über den angeforderten Dienstqualitätsfluss und den bestehenden Dienstqualitätsfluss.

12. Verfahren nach Anspruch 8, wobei die Dienstqualitätsinformation von der Anwendung (304) eine Anfrage für einen Dienstqualitätsfluss aufweist,
wobei die Dienstqualitätsinformation von dem RAN eine Information aufweist, die anzeigt, ob ein Dienstqualitätsfluss, der durch das RAN initiiert wurde, eingerichtet wurde, und
wobei das Verfahren weiter aufweist, warten, um die Dienstqualitätsinformation zu empfangen, die anzeigt, ob der Dienstqualitätsfluss, der durch das RAN initiiert wurde, für eine konfigurierbare Zeitdauer eingerichtet wurde.

13. Verfahren nach Anspruch 8, wobei das Verfahren weiter aufweist, mitteilen der Anwendung (304) von Dienstqualitätsinformation basierend auf der empfangenen Dienstqualitätsinformation von dem RAN,
insbesondere wobei das Verfahren weiter aufweist, empfangen einer Anfrage von der Anwendung (304) nach Dienstqualitätsinformation.

14. Verfahren nach Anspruch 8, wobei das Verfahren weiter aufweist, bestimmen von Dienstqualitätsfähigkeiten eines Ziel-RANs, wenn ein Benutzergerät (106a - 106l, 206a, 206b) von einem Quellen-RAN zu dem Ziel-RAN übergeht,
insbesondere wobei
i) das Bestimmen der Dienstqualitätsfähigkeiten des Ziel-RANs aufweist, bestimmen, dass das Ziel-RAN nicht in der Lage ist, von dem RAN initiierte Dienstqualitätsprozeduren zu verwenden, und wobei das Verfahren weiter aufweist, einrichten des Dienstqualitäts-Kommunikationsflusses für die Anwendung (304) durch Verwenden von Dienstqualitätsprozeduren, die durch das Benutzergerät (106a - 106l, 206a, 206b) initiiert wurden, oder
ii) das Verfahren weiter aufweist, benachrichtigen der Anwendung (304) über Dienstqualitätsereignisse, oder
iii) das Bestimmen der Dienstqualitätsfähigkeiten des Ziel-RAN aufweist, bestimmen, dass das Ziel-RAN in der Lage ist, die von dem RAN initiierte Dienstqualität zu verwenden,
wobei die Dienstqualitätsinformation von dem RAN Information aufweist, die anzeigt, ob ein Dienstqualitätsfluss, der durch das RAN initiiert wurde, eingerichtet wurde, und
wobei das Verfahren weiter aufweist, warten um die Information zu empfangen, die angibt, ob der durch das RAN initiierte Dienstqualitätsfluss für eine konfigurierbare Zeitdauer eingerichtet wurde.

15. Computerprogramm aufweisend Anweisungen, die, wenn sie auf einem Computer ausgeführt werden, den Computer veranlassen, alle Schritte des Verfahrens nach einem der Ansprüche 8 bis 14 auszuführen.

## Revendications

1. Système de communication sans fil comprenant :
un équipement d'utilisateur (106a-1061, 206a, 206b) comprenant un gestionnaire de qualité de service (310) configuré pour, dans l'ordre donné :
recevoir des informations de qualité de service en provenance d'une application (304) pour une première ressource ;
établir un flux de communication entre l'application (304) et une application ou un serveur (228) associé à un réseau IP (226) sur un réseau d'accès radio, RAN, et un réseau d'infrastructure sur la base au moins en partie des informations de qualité de service reçues en utilisant la première ressource ;
recevoir des informations de qualité de service en provenance du RAN pour la première ressource ;
déterminer si un profil octroyé par le RAN du flux de communication établi est le plus préféré dans un ensemble de profils demandés par l'équipement d'utilisateur (106a-1061, 206a, 206b) et l'ensemble de profils demandés est un sous-ensemble d'un ensemble de profils autorisés par une passerelle de desserte de données en paquets à haut débit (214) incluse dans le réseau d'infrastructure et qui relie le réseau d'infrastructure au RAN ; et
si la condition susmentionnée n'est pas satisfaite, demander au RAN de modifier la qualité de service de bout en bout du flux de communication pour l'application (304) entre l'application (304) et l'application ou le serveur (228) associé au réseau IP (226) sur la base des informations reçues en provenance du RAN.

2. Système de communication sans fil selon la revendication 1, dans lequel le gestionnaire de qualité de service (310) est configuré pour demander en outre au RAN de modifier le flux de communication sur la base d'une comparaison entre les informations de qualité de service reçues en provenance de l'application (304) et les informations de qualité de service reçues en provenance du RAN.

3. Système de communication sans fil selon la revendication 1, dans lequel l'établissement d'un flux de communication sur un RAN et un réseau d'infrastructure comprend l'établissement, pour une application (304), d'un premier flux de communication en fonction des informations de qualité de service sur un premier RAN, et le gestionnaire de qualité de service (310) est en outre configuré pour commuter sur un deuxième RAN pour le premier flux de communication de manière transparente pour l'application (304),
en particulier dans lequel
i) le premier RAN utilise une première technologie d'accès radio et le deuxième RAN utilise une deuxième technologie d'accès radio, ou
ii) le premier RAN est associé à un premier opérateur de réseau et le deuxième RAN est associé à un deuxième opérateur de réseau.

4. Système de communication sans fil selon la revendication 1,
dans lequel les informations de qualité de service provenant de l'application (304) comprennent des informations relatives à un flux de qualité de service demandé, et
dans lequel le gestionnaire de qualité de service (310) est en outre configuré pour déterminer si les informations relatives au flux de qualité de service demandé correspondent à des informations relatives à un flux de qualité de service existant lancé par le RAN,
en particulier dans lequel
i) les informations relatives au flux de qualité de service demandé comprennent un filtre de paquets et un ensemble de paramètres de qualité de service, ou
ii) le gestionnaire de qualité de service (310) est en outre configuré pour déterminer s'il faut modifier le flux de qualité de service existant sur la base des informations relatives au flux de qualité de service demandé et au flux de qualité de service existant.

5. Système de communication sans fil selon la revendication 1, dans lequel les informations de qualité de service provenant de l'application (304) comprennent une demande de flux de qualité de service,
dans lequel les informations de qualité de service provenant du RAN comprennent des informations indiquant si un flux de qualité de service lancé par le RAN a été établi, et
dans lequel le gestionnaire de qualité de service (310) est configuré pour attendre de recevoir les informations de qualité de service indiquant si le flux de qualité de service lancé par le RAN a été établi pendant une quantité de temps configurable.

6. Système de communication sans fil selon la revendication 1, dans lequel le gestionnaire de qualité de service (310) est en outre configuré pour notifier, à l'application (304), des informations de qualité de service sur la base des informations de qualité de service reçues en provenance du RAN,
en particulier dans lequel le gestionnaire de qualité de service (310) est en outre configuré pour recevoir une interrogation de l'application (304) pour des informations de qualité de service.

7. Système de communication sans fil selon la revendication 1, dans lequel, lorsque l'équipement d'utilisateur (106a-1061, 206a, 206b) passe d'un RAN source à un RAN cible, le gestionnaire de qualité de service (310) est en outre configuré pour déterminer des capacités de qualité de service du RAN cible,
en particulier dans lequel
i) le gestionnaire de qualité de service (310) détermine que le RAN cible n'est pas capable d'utiliser des procédures de qualité de service lancées par le RAN, et dans lequel le gestionnaire de qualité de service (310) est en outre configuré pour établir le flux de communication de qualité de service pour l'application (304) en utilisant des procédures de qualité de service lancées par l'équipement d'utilisateur (106a - 1061, 206a, 206b), ou
ii) le gestionnaire de qualité de service (310) est en outre configuré pour notifier, à l'application (304), des évènements de qualité de service, ou
iii) le gestionnaire de qualité de service (310) détermine que le RAN cible est capable d'utiliser une qualité de service lancée par le RAN,
dans lequel les informations de qualité de service provenant du RAN comprennent des informations indiquant si un flux de qualité de service lancé par le RAN a été établi, et
dans lequel le gestionnaire de qualité de service (310) est en outre configuré pour attendre de recevoir les informations indiquant si le flux de qualité de service lancé par le RAN a été établi pendant une quantité de temps configurable.

8. Procédé mis en oeuvre dans un système de communication sans fil et par un équipement d'utilisateur (106a - 1061, 206a, 206b), le procédé comprenant, dans l'ordre donné :
la réception d'informations de qualité de service en provenance d'une application (304) pour une première ressource ;
l'établissement d'un flux de communication entre l'application (304) et une application ou un serveur (228) associé à un réseau IP (226) sur un RAN et un réseau d'infrastructure sur la base au moins en partie des informations de qualité de service reçues en utilisant la première ressource ;
la réception d'informations de qualité de service en provenance du RAN pour la première ressource ;
la détermination si un profil octroyé par le RAN du flux de communication établi est le plus préféré dans un ensemble de profils demandés par l'équipement d'utilisateur (106a-1061, 206a, 206b) et l'ensemble de profils demandés est un sous-ensemble d'un ensemble de profils autorisés par une passerelle de desserte de données en paquets à haut débit incluse dans le réseau d'infrastructure et qui relie le réseau d'infrastructure au RAN ; et
si la condition susmentionnée n'est pas satisfaite, la demande au RAN de modifier la qualité de service de bout en bout du flux de communication pour l'application (304) entre l'application (304) et l'application ou le serveur (228) associé au réseau IP (226) sur la base des informations reçues en provenance du RAN.

9. Procédé selon la revendication 8, comprenant en outre la modification du flux de communication sur la base d'une comparaison entre les informations de qualité de service reçues en provenance de l'application (304) et les informations de qualité de service reçues en provenance du RAN.

10. Procédé selon la revendication 8, dans lequel l'établissement d'un flux de communication sur un RAN et un réseau d'infrastructure comprend l'établissement, pour une application (304), d'un premier flux de communication en fonction des informations de qualité de service sur un premier RAN, et le gestionnaire de qualité de service (310) est en outre configuré pour commuter sur un deuxième RAN pour le premier flux de communication de manière transparente pour l'application (304).

11. Procédé selon la revendication 8,
dans lequel les informations de qualité de service provenant de l'application (304) comprennent des informations relatives à un flux de qualité de service demandé, et
dans lequel le procédé comprend en outre la détermination si les informations relatives au flux de qualité de service demandé correspondent à des informations relatives à un flux de qualité de service existant lancé par le RAN,
en particulier dans lequel
i) les informations relatives au flux de qualité de service demandé comprennent un filtre de paquets et un ensemble de paramètres de qualité de service, ou
ii) le procédé comprend en outre la détermination s'il faut modifier le flux de qualité de service existant sur la base des informations relatives au flux de qualité de service demandé et au flux de qualité de service existant.

12. Procédé selon la revendication 8, dans lequel les informations de qualité de service provenant de l'application (304) comprennent une demande de flux de qualité de service,
dans lequel les informations de qualité de service provenant du RAN comprennent des informations indiquant si un flux de qualité de service lancé par le RAN a été établi, et
dans lequel le procédé comprend en outre l'attente de recevoir les informations de qualité de service indiquant si le flux de qualité de service lancé par le RAN a été établi pendant une quantité de temps configurable.

13. Procédé selon la revendication 8, dans lequel le procédé comprend en outre
la notification, à l'application (304), d'informations de qualité de service sur la base des informations de qualité de service reçues en provenance du RAN,
en particulier dans lequel le procédé comprend en outre la réception d'une interrogation de l'application (304) pour des informations de qualité de service.

14. Procédé selon la revendication 8, dans lequel le procédé comprend en outre la détermination de capacités de qualité de service d'un RAN cible, lorsqu'un équipement d'utilisateur (106a - 1061, 206a, 206b) passe d'un RAN source au RAN cible,
en particulier dans lequel
i) la détermination des capacités de qualité de service du RAN cible comprend la détermination que le RAN cible n'est pas capable d'utiliser des procédures de qualité de service lancées par le RAN, et dans lequel le procédé comprend en outre l'établissement du flux de communication de qualité de service pour l'application (304) en utilisant des procédures de qualité de service lancées par l'équipement d'utilisateur (106a - 1061, 206a, 206b), ou
ii) le procédé comprend en outre la notification, à l'application (304), d'évènements de qualité de service, ou
iii) la détermination des capacités de qualité de service du RAN cible comprend la détermination que le RAN cible est capable d'utiliser une qualité de service lancée par le RAN,
dans lequel les informations de qualité de service provenant du RAN comprennent des informations indiquant si un flux de qualité de service lancé par le RAN a été établi, et
dans lequel le procédé comprend en outre l'attente de la réception des informations indiquant si le flux de qualité de service lancé par le RAN a été établi pendant une quantité de temps configurable.

15. Programme informatique comprenant des instructions qui, lorsqu'elles sont exécutées sur un ordinateur, amènent l'ordinateur à exécuter toutes les étapes du procédé selon l'une quelconque des revendications 8 à 14.
